# EUROPÄISCHE PATENTSCHRIFT

(11) **EP 3 265 796 B1**
(45) Veröffentlichungstag und Bekanntmachung des Hinweises auf die Patenterteilung: **09.11.2022**
(21) Anmeldenummer: 16715229.7
(22) Anmeldetag: 07.03.2016
(51) Int. Cl.: G01N 27/447

(54) **GELELEKTROPHORESE-SYSTEM FÜR EINZELZELL-GELELEKTROPHORESE**
GEL ELECTROPHORESIS SYSTEM FOR SINGLE CELL GEL ELECTROPHORESIS
SYSTÈME D'ÉLECTROPHORÈSE SUR GEL CONÇU POUR UNE ÉLECTROPHORÈSE SUR GEL À CELLULE UNIQUE

(30) Priorität: 06.03.2015 CH 3132015
(43) Veröffentlichungstag der Anmeldung: 10.01.2018
(73) Patentinhaber: 4D Lifetec AG, 6330 Cham (CH)
(72) Erfinder: SCHICHT, Oliver, 6340 Baar (CH)
(74) Vertreter: Frei Patent Attorneys
(86) Internationale Anmeldenummer: PCT/CH2016/000043
(87) Internationale Veröffentlichungsnummer: WO 2016/141495

(56) Entgegenhaltungen:
- EP-A1- 2 484 749
- EP-A1- 2 587 257
- EP-A2- 1 887 349
- WO-A1-2009/127911
- WO-A1-2009/134768
- WO-A1-2015/079048
- CN-U- 202 720 211
- US-A- 5 158 661

## Beschreibung

Die Erfindung bezieht sich auf das Gebiet der chemischen und molekularbiologischen Analyse. Sie bezieht sich auf ein Gelelektrophorese-Gerät.

Weiterhin umfasst die vorliegende Erfindung ein Verfahren zur Durchführung einer Einzelzell-Gelelektrophorese (Comet-Assay) im Besonderen.

Weitere bevorzugte Ausführungsformen gehen aus den abhängigen Patentansprüchen hervor.

Einzelzell-Gelelektrophorese, auch als Comet-Assay bezeichnet, ist ein empfindliches Verfahren zum direkten Nachweis von DNS-Einzel- und Doppelstrangbrüchen, die durch unterschiedliche Ursachen entstanden sein können wie beispielsweise durch den Einfluss von Umwelttoxinen, durch chemische Reaktionen als Ergebnis der Einnahme von Medikamenten oder allgemein durch chemische Reagenzien, die mit DNA reagieren. Auch physikalische Einflüsse wie ionisierende Strahlen können entweder allein oder im Zusammenspiel mit chemischen Reagenzien DNS-Schäden verursachen.

Die Auswirkungen von Umweltgiften, chemischen Reagenzien, Medikamenten oder Strahlung auf einen Organismus werden häufig durch aufwändige, in ihrer Aussagekraft oft umstrittene und ethisch nicht immer vertretbare Tierversuche belegt. Die Einzelzell-Gelelektrophorese hat sich als eine probate Methode herausgestellt, um beispielsweise mutagene und cancerogene Umweltgifte zu identifizieren oder neue Wirkstoffe wie z.B. Zytostatika, zu screenen. Die Anwendung der Einzelzell-Gelelektrophorese hilft Tierversuche in der Industrie, Forschung und Klinik zu reduzieren.

Einzelzell-Gelelektrophoresen zur Ermittlung von Gentoxizität bereits bekannter und neu entwickelter Wirkstoffe sind insbesondere für die pharmazeutische Industrie von zunehmender Bedeutung und finden dort vermehrt und in grossem Massstab Anwendung. Dies wiederum erfordert Systeme, die effizient sind, einen hohen Durchsatz an Proben erlauben und dabei reproduzierbare Resultate liefern.

Mit Hilfe der Einzelzell-Gelelektrophorese bzw. des Comet-Assays werden zum Nachweis von DNS-Schäden einzelne Zellen, die zuvor beispielsweise aus Blut oder Gewebeproben gewonnen wurden, einer Gelelektrophorese unterzogen. Diese Zellproben werden entweder Individuen entnommen, die beispielsweise einem Umweltgift ausgesetzt waren oder es werden gesunde Zellen für die Evaluation von potentiellen Wirkstoffen und Toxinen den entsprechenden Stoffen ausgesetzt. Die zu untersuchenden bzw. die behandelten Zellen werden z.B. in Agarose eingebettet und als sogenannte Gelspots auf ein Trägermaterial wie beispielsweise einen Objektträger oder Folie aufgetragen, lysiert und entweder alkalisch behandelt um die DNS zu denaturieren oder aber in neutralem Milieu gehalten. Die anschliessende Elektrophorese führt dazu, dass sich die fragmentierte DNS durch die Ausbildung eines elektrischen Felds vom Zellkern entfernt, d.h. die negativ geladenen DNS-Fragmente wandern zum Pluspol und produzieren dabei einen sogenannten "Kometen". Die Menge der DNS, die aus dem Kopf des Kometen in den Schweif ausgewandert ist, wird quantifiziert und dient als Mass für die in der Probe vorliegende DNS-Schäden. Die Quantifizierung erfolgt zumeist mittels Fluoreszenzmikroskopie und erfolgt manuell, teil- oder voll automatisiert.

Herkömmliche Gelelektrophorese-Geräte bestehen aus einer Pufferkammer, die das Trägermaterial mit den darauf befindlichen Gelspots auf einer erhöhten Auflagefläche (horizontalen Platte) aufnimmt.

Um eine annähernd konstante Temperatur zu gewährleisten und eine Überhitzung der Gelspots zu verhindern, wird die Elektrophorese häufig in Kühlräumen durchgeführt oder durch ein externes Kühlsystcm gekühlt.

Aus EP2587257A1 sind eine Objektträgerhalteranordnung und ein Verfahren zur Verwendung beim Screening eines Comet-Aassays bekannt. Die Objektträgerhalteranordnung weist eine innere Oberfläche auf und ist konfiguriert, um einen Objektträger aufzunehmen, der eine Vielzahl von biologischen Zellen auf seiner oberen Oberfläche aufweist. Wenn der Objektträger in der Objektträgerhalteanordnung befestigt ist, verbinden sich die innere Oberfläche der Objektträgerhalteanordnung und die obere Oberfläche des Objektträgers, um einen Hohlraum mit einem offenen oberen Ende zu bilden. Der Hohlraum ist wasserdicht und so konfiguriert, dass er eine Flüssigkeit aufnehmen kann. Das beschriebene Verfahren zur Durchführung eines Comct-Assays unter Verwendung des in der Objektträgerhalteranordnung angeordneten Objektträgers umfasst die Durchführung der Verkapselung, Lyse, Elektrophorese, Färbung und Abbildung von Zellen auf dem Objektträger, während der Objektträger innerhalb der Objektträgerhalterungsanordnung gesichert bleibt.

Aus EP2484749A1 ist ein Gelelektrophorese-Assay-System bekannt, welches ein Bodenstück, ein Packungsstück, ein Elektrophorese-Gel-Verankerungsstück und ein Kammerteil aufweist. Das Elektrophorese-Gel-Verankerungsstück ist zwischen dem Packungsstück und dem Bodenstück positioniert. Das Kammerteil ist auf der Oberseite des Packungsstücks positioniert und durch mechanische Befestigungsmittel an dem Bodenstück befestigt, wodurch eine flüssigkeitsdichte Verbindung zwischen dem Kammerteil, dem Packungsstück, dem Elektrophorese-Gel-Verankerungsstück und dem Bodenstück entsteht. Das Kammerteil und das Packungsstück sind während des normalen Gebrauchs vom Bodenstück und vom Elektrophorese-Gel-Verankerungsstück abnehmbar.

Aus WO 2009/127911 ist ein "non-immersed"- Gelelektrophoresegerät bekannt, bei dem eine gebogene Platte nur an den Enden in ein Pufferbad ragen.

Herkömmliche Gelelektrophorese-Systeme für Comet-Assays liefern zwar akzeptable Resultate; allerdings zeigt es sich immer wieder, dass die Ergebnisse von Labor zu Labor, von Anwender zu Anwender im selben Labor, sogar von Gel zu Gel und Assay zu Assay sehr stark variieren können, beispielsweise kann dieselbe Probe bei einer unabhängigen Untersuchung in 12 verschiedenen Laboren ein DNS-Schädigung von 20% bis zu 80% ergeben, was einem Faktor von vier entspricht. Ursachen für die geringe Reproduzierbarkeit sind bei der Präparation der Gelspots (Proben) sowie den nicht standardisierten Elektrophoresebedingungen für die Gele zu suchen, wie beispielsweise Schwankungen in der Temperatur der Pufferlösung während der Elektrophorese, in dem Abstand zwischen den Elektroden und/oder in der Puffcrhöhc und in dem Gehalt an Ionen des Puffers über den Gelspots. Der prinzipielle Aufbau der heutigen Elektrophoresesysteme führt zu unspezifischen elektrischen Feldern und inhomogenen Laufbedingungen und somit zu unterschiedlicher Auftrennung gleicher Zell- bzw. DNS-Proben von Assay zu Assay und damit zu nicht reproduzierbaren Ergebnissen.

Ansätze zur Lösung dieser Probleme sind im Stand der Technik beschrieben. Beispielsweise werden zur annähernden Aufrechterhaltung der Temperatur Kühlelemente verwendet, die unterhalb der Gel-Plattform angebracht und an eine externe Wasserversorgung angeschlossen werden. Mit diesen Kühlelementen kann jedoch keine konstante Temperatur in dem Elektrophoresesystem während einer Elektrophorese erzeugt werden. Die Pufferhöhe wird durch eine Abdeckung der Gele während des Laufs konstant gehalten (Trevigen Standardized Comet Assay System). Andere derzeit bekannte Systeme gewährleisten eine Durchmischung des stark basischen Laufpuffers mittels einer integrierten Pumpe (US 5,259,943, Kozulic et al.).

Ein weiteres Problem der herkömmlichen Einzelzell-Gelelektrophoreseverfahren ist deren niedriger Probendurchsatz. Die in ihrer Grösse limitierte horizontale Auflagefläche für das Trägermaterial in der Elektrophoresekammer der Elektrophorese-Geräte des Stands der Technik schränkt den Probendurchsatz stark ein. Werden mehrere Träger mit darauf befindlichen Gelspots gleichzeitig prozessiert, variiert das elektrische Feld zwischen den äusseren Trägern und demjenigen über den inneren Trägern. Somit unterliegen die zu untersuchenden Zellen in den Gelspots nicht den gleichen Bedingungen und die Resultate sind nur bedingt miteinander vergleichbar.

Bei einem herkömmlichen Assay wird für die Elektrophorese ein Objektträger aus Glas mit einer oder mehreren Vertiefungen oder ohne Vertiefungen verwendet, in welche die in Agarose suspendierten Zellen pipettiert werden. In anderen Verfahren werden flexible Folien verwendet, auf die mittels einer Mehrkanalpipette die die Zellen enthaltenden Agarose-Tropfen (Gel-Spots) aufgebracht werden. Um ein Verrutschen oder Falten der Folie zu verhindern, wird diese auf einen Plastikrahmen aufgespannt, indem sie in vier sich auf dem Plastikrahmen befindliche Stäbe aus rostfreiem Stahl eingehakt wird (Gutzkow et al., Mutagenesis, 1-8, 2013). Andere Verfahren wenden Trägerplatten aus Glas an, deren Oberfläche aufgeraut ist, um ein Ablösen der Gelspots zu verhindern (DE 10 2007 046 615). Die zuvor beschriebenen Trägermaterialien für die Gelspots haben den Nachteil, dass sie beispielsweise im Fall der verwendeten Folie sehr instabil sind und im Fall einer festen Trägerplatte aus Glas sehr leicht zerbrechen. Darüber hinaus ist eine Haftung der Gelspots auf einem Glasträger nicht immer garantiert. Auch wenn die Glasplatte mit einer Agaroseschicht "gecoated" ist, ist dadurch eine Haftung nicht gewährleistet. Wertvolle Proben gehen dadurch verloren. Beide Materialien stellen daher ein gewisses Risiko während der weiteren Arbeitsvorgänge nach dem Auftragen der die Zellen enthaltenden Gelspots dar. Die Trägerplatte mit den Gelspots bzw. die Folie wird in einen Lysis-Puffer überführt, dann der Elektrophorese unterzogen, in eine fluoreszierende Färbelösung gebracht, gespült und zuletzt einer automatisierten mikroskopischen Analyse unterzogen. Dieses extensive Handling erfordert eine ausgezeichnete Haftung der Gelspots auf dem Trägermaterial, eine gewisse Stabilität und Bruchsicherheit sowie Resistenz der Trägerplatte bzw. der Folie gegenüber den verschiedenen während des Verfahrens anzuwendenden Lösungsmitteln und Puffern.

Auch die Abstände der Gelspots können je nach Auftragungsart variabel sein. Für eine automatisierte mikroskopische Auswertung der Elektrophorese-Ergebnisse ist es von grosser Bedeutung, dass die Zentren der Gelspots immer gleich positioniert sind und somit auch die Auswertung der Gelspots auf standardisierten Bedingungen beruht. Der Stand der Technik beschreibt beispielsweise die Verwendung einer Masterplatte mit 12 oder 96 Öffnungen für ein präziseres Positionieren der Gelspots auf dem Trägermaterial. Die Masterplatte wird über dem Trägermaterial positioniert, jedoch nicht fixiert, was leicht zu einem Verrutschen während des Auftragens der Gelspots und somit zu ungleich beabstandeten Gelspots auf dem Trägermaterial führen kann.

Die obengenannten Beispiele aus dem Stand der Technik machen deutlich, dass eine dringende Notwendigkeit für standardisierte Bedingungen bei der Durchführung von Einzelzell-Gelelektrophoresen bzw. Comet-Assays besteht.

Daher ist es Aufgabe der vorliegenden Erfindung ein entsprechendes Gelelektrophorese-Gerät, sowie ein Verfahren zur Durchführung von Einzelzell-Gelelektrophoresen bzw. Comet-Assays zur Verfügung zu stellen, welche eine hohe Reproduzierbarkeit der erzielten Resultate bei gleichzeitig hoher Effizienz des Probendurchsatzes gewährleistet und neben einer hohen Reproduzierbarkeit einen grosser Probendurchsatz ermöglicht. Dabei kann das System hochempfindlich und spezifisch und seine Handhabung einfach, schnell und effizient sein.

Es ist weiterhin Aufgabe der vorliegenden Erfindung Vorrichtungen zum optimierten Auftragen von Gelspots und deren anschliessendem Handling zu schaffen.

Eine erste Ausführungsform der Erfindung umfasst ein Gelelektrophorese-Gerät gemäß Anspruch 1.

Dadurch wird eine präzise Positionierung der Trägerplatte im homogenen elektrischen Feld ermöglicht, wodurch die hohe Reproduzierbarkeit der Gelelektrophorese, insbesondere der Einzelzell-Gelelektrophorese, ermöglicht wird.

Mit anderen Worten: Die hohe Reproduzierbarkeit der Einzelzell-Gelelektrophorese wird durch die präzise Positionierung der Trägerplatte relative zum erzeugten elektrischen Feld in der Kammer mit Hilfe der Niederhaltelemente ermöglicht.

Eine Ausführungsform der vorliegenden Erfindung umfasst eine verbesserte Trägerplatte für Gelspots. Die Trägerplatte für die Aufnahme von mindestens einem Gel bzw. einem Gelspot weist eine planare Fläche auf. Auf der genannten planaren Fläche kann eine Polyester-Folie mit hydrophiler Oberfläche aufgebracht sein, das heisst, dass mindesten die der Trägerplatte abgewandte Seite der Polyester-Folie hydrophile Eigenschaften aufweist.

Eine weitere Ausführungsform umfasst eine Trägerplatte mit planarer Fläche, wobei die planare Fläche mit einer hydrophilen Schicht behandelt ist.

Die planare Fläche der Trägerplatte die die Polyester-Folie und/oder die hydrophile Schicht aufweist kann auch hydrophile Seite genannt werden.

Die Trägerplatte kann viereckig, insbesondere rechteckig, ausgebildet sein.

Die Trägerplatte kann einem Randbereich mit mindestens einer, insbesondere zwei, insbesondere drei, insbesondere vier Öffnungen, zur Aufnahme und Positionierung auf mindestens einem Niederhalteelement aufweisen. Der Randbereich der Trägerplatte erstreckt sich im Bereich der Kanten der Trägerplatte.

Eine solche Öffnung kann eckständig angeordnet sein. Die Öffnung kann rund, oval oder eckig sein oder jede andere denkbare Form haben. Die Öffnung kann auch schlüssellochförmig ausgebildet sein. Eine schlüssellochförmige Öffnung weist einen ersten Bereich und einen zweiten Bereich auf, wobei der erste Bereich einen grösseren Durchmesser aufweist als der zweite Bereich und der erste Bereich an den zweiten Bereich angrenzt. Mit anderen Worten: der erste Bereich ist im Wesentlichen kreisförmig und der zweite Bereich ist als sich an den ersten Bereich anschliessende Ausbuchung ausgebildet.

In einer Ausführungsform kann die Trägerplatte einen Randbereich mit 2 bis 4 Öffnungen aufweisen, wobei sich mindestens eine der Öffnungen oder deren Umgebung in der Formgebung von den anderen Öffnungen oder deren Umgebungen unterscheidet. Es kann sein, dass die Öffnungen und/oder deren Umgebungen mit einer Form einer Befestigungsvorrichtung, z.B. des Niederhaltelements, für die Trägerplatte in einem Gelelektophorese-Gerät konform ist. Durch die unterschiedliche Formgebung kann gewährleistet werden, dass die Trägerplatten mit den aufgebrachten Gelspots immer in derselben Orientierung in das Gelelektrophorese-Gerät eingebracht werden.

In einer anderen Ausführungsform kann die Trägerplatte in einem ersten Randbereich entlang einer ersten Querseite der Trägerplatte eine erste Öffnung angeordnet sein und in einem zweiten Randbereich entlang der gegenüberliegenden zweiten Querseite der Trägerplatte können zwei weitere Öffnungen angeordnet sein. Aufgrund dieser asymmetrischen Anordnung der Öffnungen im Randbereich der Trägerplatte kann bei entsprechend komplementären Anordnung von Niederhaltelementen eine orientierungsspezifische Positionierung der Trägerplatte am Funktionsdeckel bzw. in der Kammer ermöglicht werden. Durch die asymmetrische Anordnung von Öffnungen in den Trägerplatte und Niederhaltelementen des Gelelektrophorese-Geräts kann gewährleistet werden, dass die Trägerplatten mit den aufgebrachten Gelspots immer in derselben Orientierung in das Gelelektrophorese-Gerät eingebracht werden.

In einer weiteren Ausführungsform kann die Trägerplatte im ersten Randbereich mindestens zwei erste Öffnungen und im gegenüberliegenden zweiten Randbereich mindestens zwei weitere, zweite Öffnungen aufweisen. Dabei sind die ersten Öffnungen asymmetrisch zueinander, in Bezug auf ihre Verteilung entlang der jeweiligen Querseite der Trägerplatte, angeordnet. Auch auf diese Weise kann die Trägerplatten mit den aufgebrachten Gelspots immer in derselben Orientierung in das Gelelektrophorese-Gerät eingebracht werden.

Selbstverständlich können die Öffnungen wie beschrieben auch entlang der Längsseite der Trägerplatte angeordnet sein. Es ist auch möglich, dass die Öffnungen im Randbereich der Querseite und/oder Längsseite asymmetrisch angeordnet sind.

Die Trägerplatten der vorliegenden Erfindung entsprechen beispielsweise in ihren Ausmassen ANSI-Standards (American National Standards Institute) für Platten mit 12 bis 96 Vertiefungen (ANSI/SLAS 1-2004, ANSI/SLAS 2-2004, ANSI/SLAS 3-2004, ANSI/SLAS 4-200, ANSI/SLAS 6).

In einer weiteren Ausführungsform umfasst die Trägerplatte eine transparente, flexible Folie aus Polyester, welche eine behandelte hydrophile und eine unbehandelte hydrophobe Seite aufweist. Folien der genannten Art sind als solche im Stand der Technik bekannt (Lonza, GelBond^{®} Film). In einer Ausführungsform der Erfindung ist die Folie mit ihrer unbehandelten hydrophoben Seite beispielsweise durch Aufkleben auf der Trägerplatte fixiert.

In einer weiteren Ausführungsform der vorliegenden Erfindung weist die Trägerplatte keine Folie auf, sondern ist selbst mit einer hydrophilen Schicht für eine bessere Haftung der Gelspots behandelt. Dabei kann es sein, dass die Teile der planaren Fläche, eine oder mehrere Seiten oder die gesamte Trägerplatte mit einer hydrophilen Schicht behandelt ist.

In einer weiteren Ausführungsform zeichnet sich die Fläche der Trägerplatte, auf welche eine Folie aufgebracht wird, durch ihre Planarität aus, die eine gleichmässige Ausbildung der darauf aufzubringenden Gelspots ermöglicht. Ausserdem ist die Planarität der Trägerplattenfläche für den Mikroskopiervorgang bei der an die Elektrophorese anschliessenden Auswertung der Ergebnisse von grosser Bedeutung, da das Mikroskop nicht ständig neu fokussiert werden muss, wodurch der Vorgang des Auswertens beträchtlich beschleunigt wird.

In einer weiteren Ausführungsform ist die Folie mit einer, eine planare Fläche aufweisende, Seite der Trägerplatte verklebt, wodurch ein Falten verhindert und die Planarität der Folie gewährleistet wird. Ausserdem wird ein Verrutschen der Folie beim Handling der Trägerplatte vermieden. Alternativ kann die Folie auf die Trägerplatte aufgespannt sein, wobei der Randbereich der Trägerplatte als Rahmen ausgebildet ist, in den die Folie einspannbar ist.

In einer Ausführungsform der Trägerplatte kann die die Folie aufweisende Fläche derart vertieft sein, dass die in der Vertiefung aufgeklebte und/oder aufgespannte Folie und der Rand der Trägerplatte sich auf einer Höhe befinden, d.h. eine Ebene bilden. Dies hat den Vorteil, dass die auf die Folie aufzubringenden Gelspots auf gleicher Höhe mit dem Trägerplattenrand sind, was den Mikroskopiervorgang erleichtert.

In einer Ausführungsform ist die von der Trägerplatte abgewandte Seite der Folie, die sogenannte Oberseite der Folie, diese Seite entspricht der hydrophilen Seite, derart vorbehandelt, dass darauf aufgebrachte Gelspots auf der Oberfläche haften. Die Gelspots mit dem darin eingeschlossenen zu untersuchenden Proben (DNS) können dabei kovalent an die behandelte hydrophile Seite der Folie gebunden sein, wodurch ein Ablösen, Verschieben oder Übereinanderlagern der Gelspots während des Elektrophoresevorgangs und/oder anschliessenden weiteren Behandlungsschritten wie Waschen, Färben und/oder der anschliessenden mikroskopischen Auswertung verhindert wird. Dadurch entsteht nahezu kein Verlust an Gelspots während des gesamten Handlings, wodurch sich neben der Reproduzierbarkeit auch die Effizienz des gesamten Verfahrens deutlich gegenüber den Verfahren des Stands der Technik erhöht.

Gelelektrophoresen können sowohl im neutralen als auch im stark basischen Bereich durchgeführt werden. Bei Einzelzell-Gelelektrophoresen im basischen Milieu kann der Elektrophorese-Puffer einen pH-Wert von über 13, vorzugsweise pH 14 haben. Es ist daher vorteilhaft, wenn die Trägerplatte hohen Anforderungen in Bezug auf Resistenz gegenüber Lösungsmitteln im stark basischen Bereich genügt, also ein alkali-resistenten Material aufweist, zum Beispiel mit einem alkali-resistenten Material beschichtet ist.

Die Trägerplatte kann aus einem transparenten organoplastischen Material wie beispielsweise Polystyren, Polypropylen und Polyterephthalat bestehen.

In einer weiteren Ausführungsform ist die Platte bruchfest und verwindungssteif, um beispielsweise einem Handling durch einen Roboter-Greifarm standzuhalten, der in einem automatisierten Verfahren die Trägerplatten zwischen Gelektrophorese-Kammer und/oder Färbe-Kammer und/oder Entfärbe-Kammer und/oder Mikroskop bewegt. Das Material der Trägerplatte kann eine Bruchfestigkeit von mindestens 15 bis 20 Newton, vorzugsweise von 16 bis 18 Newton, aufweisen.

Bei einer weiteren Ausführungsform der Erfindung dient die Trägerplatte nicht nur als Träger für die zu untersuchenden Probe, sondern fungiert auch als Wasch- und/oder Färbevorrichtung für die die Proben enthaltenden Gelspots. Hierzu kann ein Aussen-Rahmen auf die Trägerplatte aufgebracht werden. Die Wasch- und/oder Färbelösungen kann direkt auf die Trägerplatte gegeben werden. Als Färbelösung kann beispielsweise stark mutagenes Ethidiumbromid verwendet werden. Der Kontakt zu solchen mutagenen Verbindung sollte vermieden werden. Wie bereits beschrieben, kann mit Hilfe des Aussen-Rahmens die Wasch- und/oder Färbelösung direkt auf die Trägerplatte aufgebrachten werden und ein Abfliessen der Wasch- und/oder Färbelösung von der Trägerplatte kann durch den Aussen-Rahmen verhindert werden, wobei der gegenüber der Trägerplatte erhöhte Aussen-Rahmen wie ein Deich wirkt. Dadurch fällt das umständliche Hantieren der Trägerplatten bei der Überführung in die verschiedenen für Wasch- und/oder Färbevorgänge vorgesehenen Behälter weg. Darüber hinaus wird die Trägerplatte nicht als Ganzes, sondern nur im Bereich der Proben bzw. der Gelspots beispielsweise mit der mutagenen Färbelösung kontaminiert.

Die Öffnung der Trägerplatte kann als Sackloch und/oder durchgehende Ausnehmung, also sich durch die gesamte Dicke der Trägerplatte erstrecken, ausgebildet sein.

Die Trägerplatte kann auf der der hydrophilen Seiten abgewandten Seite der Trägerplatte im Randbereich ein Abstandselement aufweisen. Das Abstandselement kann in der Umgebung der Öffnung angeordnet sein, wobei das Abstandselement die Öffnung hohlzylinderförmig umgeben kann. Das hohlzylinderförmige Abstandselement kann mindestens einen Schlitz aufweisen, der die von einen Grundfläche in Richtung der anderen Grundfläche des Hohlzylinders erstreckt. Auf diese Weise weist das Abstandselement elastische bzw. federnde Eigenschaften auf, die ein Einführen bzw. Positionieren mit einem Niederhaltelement erleichtern. Das Abstandselement kann auch pinförmig bzw. pinartig mit einen runden oder eckigen oder beliebig ausgestalteten Querschnitt ausgestaltet sein. Das Abstandselement kann auch unabhängig von der Position der Öffnung im Randbereich angeordnet sein. Die Trägerplatte kann mindestens zwei, insbesondere mindestens drei, insbesondere mindestens vier Abstandselemente im Randbereich aufweisen. Die Abstandselemente können insbesondere an gegenüberliegenden Quer- und/oder Längsseiten der Trägerplatte angeordnet sein. Dadurch wird es möglich, dass mehrere Trägerplatten übereinander gestapelt werden können, ohne das darauf befindliche Gelspots/Proben beeinflusst werden, wodurch eine Lagerung der Trägerplatten mit den aufgebrachten Proben, bspw. im Kühlschrank, vereinfacht werden kann. Das Abstandselement kann auch eine einfache Positionierung der Trägerplatte im Elektrophoresetank ermöglichen.

Die Trägerplatte kann auf einen Handlingrahmen abgestimmt sein. Der Handlingrahmen weist, beispielsweise eckständig und/oder auf seinen Längs- und Querseiten, mindestens ein Befestigungsmittel zur Aufnahme einer Trägerplatte auf. Das Befestigungsmittel kann ein Basisteil und eine stiftförmiger Erhöhung umfassen. Es kann sein, dass das Basisteil auf dem Handlingrahmen sitzt und die stiftförmige Erhöhung ihrerseits auf der dem Handlingrahmen abgewandten Seite des Basisteils sitzt. Das Befestigungsmittel, insbesondere ein Basisteil und eine stiftförmige Erhöhung, kann so ausgebildet sein, dass es schlüssig in eine Öffnung der Trägerplatte und/oder zu einer Umgebung einer Öffnung auf der Trägerplatte passt. Die Erhöhung kann stiftförmig ausgebildet sein. Das Basisteil kann rund, eckig, oval oder in einer anderen beliebigen Form ausgebildet sein.

Der Handlingrahmen ermöglicht ein für den Anwender kontaminationsfreies Einsetzen und Entnehmen der Trägerplatte in bzw. aus dem stark alkalischen Elektrophorese-Puffer der Gelelektrophorese-Kammer sowie einen kontaminationsfreien Transfer in Wasch- und/oder Färbelösungen. Ein solcher Handlingrahmen ist beispielsweise auch in Gelelektrophorese-Systemen des Stands der Technik verwendbar.

Die Trägerplatte kann auf eine Pipettierhilfe für Einzel- oder Mehrkanalpipetten abgestimmt sein. Die Pipettierhilfe weist einen Pipettierblock und einen Rahmen auf. Die Pipettierhilfe kann ein durchsichtiges organoplastisches Material.

Die Pipettierhilfe kann konische Durchlässe aufweisen, das heisst der Durchmesser der Durchlässe kann in einer Richtung schmaler werden. Zum Beispiel kann es sein, dass ein unterer Auslass einen geringeren Durchmesser als ein oberer Einlass aufweist. In einer anderen Ausführungsform können die Durchlässe zylindrisch ausgebildet sein, d.h. der Durchmesser der Durchlässe bleibt konstant, das heisst Einlass- und Auslassöffnungen haben den gleichen Durchmesser.

Die Pipettierhilfe kann bis zu 96 Durchlässe aufweisen.

Die Pipettierhilfe umfasst einen Rahmen, beipielsweise aus Plastik oder Metall, insbesondere aus Edelstahl.

Der Rahmen kann, zum Beispiel längsseitig, mit dem Pipettierblock fest verbindbar sein.

Es kann sein, dass der Rahmen auf einer Seite, zum Beispiel auf der Seite der unteren Auslässe, den Pipettierblock überragt.

Der Rahmen kann eine Aussparung in der Grösse der Trägerplatte aufweisen. Für den Pipettiervorgang wird der Rahmen mit der Aussparung auf die Trägerplatte aufgesetzt, wodurch die Trägerplatte im Rahmen der Pipettierhilfe passgenau aufgenommen wird und während des Pipettiervorgangs nicht verrutschen kann. Das heisst, dass die Trägerplatte passgenau in die Aussparung des Rahmens positionierbar ist. Insbesondere kann es sein, dass die Aussparung des Rahmens für Trägerplatten gemäss oben genannter ANSI-Standards ausgestaltet ist. Dies ermöglicht das Pipettieren gleichmässig geformter und gleich grosser Gelspots in regelmässigen Abständen auf die Trägerplatte oder auf die auf der Trägerplatte befindliche Folie und gewährleistet, dass sich das Zentrum der Spots in einem definierten Bereich befindet und bei der automatisierten mikroskopischen Auswertung der Ergebnisse schnell und problemlos gefunden und mikroskopiert werden kann.

Ein Gelelektrophorese-System kann ein Gelelektrophorese-Gerät sowie weitere Komponenten umfassen.

Das Gelelektrophorese-System kann
- ein integriertes Mittel für die Temperaturkontrolle und/oder
- ein integriertes Mittel zur Kühlung und/oder Wärmeerzeugung,
   o insbesondere für die Aufrechterhaltung einer konstanten Temperatur in dem Gelelektrophorese-Gerät während des Elektrophoresevorgangs,
aufweisen.

In einer Ausführungsform kann ein Gelelektrophorese-System ein integriertes Mittel für die Pufferzirkulation umfassen,
o insbesondere ein integriertes Mittel für die Pufferzirkulation durch welches eine gleichmässige Ionen- und Temperaturverteilung in der Pufferlösung während der Elektrophorese zu gewährleisten werden kann.

In einer Ausführungsform kann ein Gelelektrophorese-System
- ein integriertes Spannungserzeugungsgerät und/oder
- ein integriertes Netzanschluss-Gerät und/oder
- eine integrative Software und/oder
- eine nachgelagertes, integriertes und automatisiertes Analysevorrichtung zur Quantifizierung von erhaltenen Ergebnissen und/oder
- eine digitale Schnittstelle zur weiteren Verarbeitung der Resultate
aufweisen.

In einer Ausfuhrungsform können Daten von Messelektroden und/oder Daten eines Mittels für die Temperaturkontrolle von einer, im Gelelektrophorese-Gerät integrierten, Software erfasst und optional aufgezeichnet werden. Die Software kann auf Grundlage dieser Daten ein Mittel zur Erzeugung von Spannung, ein Mittel für die Pufferzirkulation und/oder ein Mittel zur Kühlung und Wärmeerzeugung steuern und/oder regulieren. Sollten die gemessenen Werte von einem vorgegeben Wertebereich abweichen, steuert die Software die oben genannten Mittel so, dass die vom Soll abweichenden Werte korrigiert werden. Auf diese Weise ist es möglich bestimmte Parameter während des gesamten Elektrophoresevorgangs in einen bestimmten Parameterbereich, insbesondere im Wesentlichen konstant, zu halten. Dadurch können gleichbleibende Bedingungen, zum Beispiel ein gleichbleibendes, elektrisches Feld im Bereich der Trägerplatten mit den Gelspots, gewährleistet werden.

Die Elektrophorese-Kammer, also die Kammer für die Aufnahme eines Gelelektrophorese-Puffers, des Gelelektrophorese-Geräts ist mit einem Funktionsdeckel verschliessbar. Der Schliessmechanismus ist beispielsweise als Magnet ausgebildet. In einer weiteren Ausführungsform unterbricht das Öffnen des Funktionsdeckels den Stromfluss in der Kammer.. Dadurch können zum Beispiel Verletzungen des Benutzers verhindert werden.

Der Funktionsdeckel kann einen Griff für leichtes Öffnen und Schliessen der Elelektrophorese-Kammer aufweisen.

Für ein gleichmässiges Gleiten während des Schliess- und Öffnungsvorgangs der Elektrophorese-Kammer kann der Funktionsdeckel auf beiden Querseiten mit der Elektrophorese-Kammer mittels Scharniergelenken verbunden sein. Solche Scharniergelenke können arretierbar sein. Wenn Niederhalteelemente an dem Funktionsdeckel angeordnet und die Scharniergelenke arretierbar sind, können Trägerplatten im geöffneten Zustand des Funktionsdeckels mit Druck auf die Niederhalteelemente aufgebracht und/oder von diesen wieder gelöst werden können, ohne dass sich der Deckel dabei bewegt. Es ist auch möglich, dass der Funktionsdeckel als Klappdeckel ausgebildet ist und mit einem Klappscharnier mit dem Elektrophoresetank verbunden ist.

Die Verbindung des Funktionsdeckels mit dem Elektrophoresetank kann eine Bremse aufweisen. Dadurch kann eine ungewolltes zuklappen des Funktionsdeckels verhindert werden und eine Beschädigung der Proben, welche sich auf einer am Funktionsdeckel positionierten Trägerplatte aufgebracht sind, verhindert werden. Daher kann eine Probensicherheit erhöht werden.

In einer weiteren Ausführungsform der vorliegenden Erfindung kann die mindestens eine Trägerplatte in die Gelelektrophorese-Kammer, also die Kammer für die Aufnahme eines Gelelektrophorese-Puffers, eingebracht werden. Wenn Niederhalteelemente im Inneren der Kammer, insbesondere im und/oder am Boden der Kammer, angeordnet sind, kann eine Trägerplatte an einem oder mehreren Niederhalteelementen angebracht werden. Wenn die Trägerplatte entsprechende Öffnungen aufweist, kann die Trägerplatte mit mindestens einer Öffnung auf mindestens ein Niederhaltelement aufsteckbar und/oder fixierbar sein.

In einer Ausführungsform sind beispielsweise 1 bis 12 Niederhaltelemente im Inneren der Kammer angeordnet und beispielsweise 1 bis 6 Trägerplatten in die Kammer einbringbar. Diese können beispielsweise horizontal sandwichartig oder vertikal mit Zwischenräumen zwischen den Trägerplatten angeordnet und frei vom Gelelektrophorese-Puffer umspülbar sein.

Der Funktionsdeckel kann derart ausgebildet sein, dass dieser auf seiner der Kammer zugewandten Seite das mindestens eine Niederhaltelement zur Aufnahme und Positionierung von mindestens einer Trägerplatte umfasst.

Wenn der Funktionsdeckel nach der Durchführung der Gelelektrophorese geöffnet wird, wird die mindestens eine am Funktionsdeckel befestigte Trägerplatte aus dem in der Kammer befindlichen Gelelektrophorese-Puffer herausgehoben und der Gelelektrophorese-Puffer kann von der mindestens einen im Funktionsdeckel befindlichen Trägerplatte ablaufen. Der Benutzer kommt somit nicht mehr, wie bei herkömmlichen Geräten, mit dem Gelelektrophorese-Puffer in Berührung.

Die Niederhaltelemente können derart ausgebildet sein, dass die mindestens eine Trägerplatte mit mindestens einer Öffnung auf das mindestens eine Niederhaltelement aufsteckbar und fixierbar ist.

Gemäss einer Ausführungsform des Funktionsdeckels kann dieser beispielsweise 1 bis 12 Niederhaltelemente aufweisen und beispielsweise 1 bis 6 Trägerplatten aufnehmen. Auf diese Weise können beispielsweise drei Trägerplatten horizontal in einer Ebene des Funktionsdeckels fixierbar sein. Über und/oder unter diesen horizontal angeordneten Trägerplatten können sandwichartig weitere Trägerplatten fixierbar sein. Alternativ zu einer solchen horizontalen Anordnung sind auch andere Anordnungen, zum Beispiel eine vertikale Anordnung, der Trägerplatten im Funktionsdeckel möglich.

In einer Ausführungsform ist das Gelelektrophorese-Gerät dazu eingerichtet, dass nach dem Schliessen des Funktionsdeckels die mindestens eine Trägerplatte in den in der Kammer befindlichen Gelelektrophorese-Puffer eingetaucht werden kann und von dem Gelelektrophorese-Puffer frei umspült werden kann. In einem System das zum zeitgleichen Eintauchen mehrerer Trägerplatten eingerichtet ist, kann sich zwischen je zwei Trägerplatten ein Zwischenraum befinden, so dass jeder der eingetauchten Trägerplatten frei von dem Elektrophorese-Puffer umspült werden können. Mit anderen Worten: Das mindestens eine Niederhalteelement des Gelelektrophorese-Gerätes ist dazu eingerichtet die mindestens eine Trägerplatte derart aufzunehmen, dass die Trägerplatte in der Kammer frei vom Gelelektrophorese-Puffer umspülbar ist.

In einer Ausführungsform ist mindestens eines der Niederhaltelemente oder Teile davon als Messelektrode für die Messung eines elektrischen Feldes ausgebildet. Dadurch kann während des Elektrophoresevorgangs kontinuierlich das elektrische Feld gemessen werden und die gemessenen Daten zum Beispiel an eine Software weiterleitet werden. Dabei kann zum Beispiel das elektrische Feld über der mindestens einen Trägerplatte und/oder über mehrere Trägerplatten und/oder zwischen zwei Trägerplatten gemessen und mit der Software gesteuert werden.

In einer Ausführungsform sind mindestens zwei der Niederhaltelemente als Messelektroden ausgebildet.

Das Gelelektrophorese-Gerät weist eine Messelektrode auf. Diese kann unabhängig vom Niederhaltelement ausgebildet sein. Auch eine solche separate Messelektrode ist dazu eingerichtet das elektrische Feld über der mindestens einen Trägerplatte und/oder über mehrere Trägerplatten und/oder zwischen zwei Trägerplatten zu messen. Die Messelektrode kann als Pin ausgebildet sein.

Die Messelektrode kann einen Messbereich aufweisen, der derart in der Kammer angeordnet ist, dass er im positionierten Zustand der Trägerplatten auf der Niederhaltelement und im geschlossen Zustand des Gelelektrophorese-Geräts zwischen den Trägerplatten liegt. Dadurch kann das elektrische Feld in der Nähe der Trägerplatte gemessen werden und gegebenenfalls mit Hilfe einer Software gesteuert werden. Dabei kann die Messelektrode mit einem elektrischen Isolator beschichtet sein und nur im Messbereich eine Messungen des elektrischen Feldes ermöglichen. Dabei kann es sein, dass sich einige ein Niederhaltelement bezüglich der Formgebung von den übrigen Niederhaltelementen unterscheiden. Analog kann es sein, dass sich einige der Öffnungen und/oder Umgebungen der Öffnungen einer Trägerplatte bezüglich der Formgebung von den anderen Öffnungen und/oder Umgebungen der Öffnungen der Trägerplatte unterscheiden, und zwar so, dass die sich unterscheidenden Niederhalteelemente ausschliesslich mit den sich unterscheidenden Öffnungen verbunden werden können. Dadurch kann eine eindeutige Orientierung der Trägerplatte in der Elektrophorese-Kammer, also die Kammer für die Aufnahme eines Gelelektrophorese-Puffers vorgegeben werden. Dadurch ist es möglich für alle Trägerplatten, beziehungsweise für die darauf befindlichen Gelspots mit den zu untersuchenden Proben, die Laufrichtung der Elektrophorese vorzubestimmen.

Wird mehr als eine Trägerplatte gleichzeitig einer Elektrophorese unterzogen, können in einer bevorzugten Ausführungsform der vorliegenden Erfindung je zwei Trägerplatten derart angeordnet sein, dass sich die darauf angebrachten Gelspots einander gegenüberliegen ("face-to-face").

Das durch die Elektroden erzeugte elektrische Feld kann zwischen den beiden von der Pufferlösung frei umspülten Trägerplatten am homogensten sein, wobei die Position der Trägerplatten im elektrischen Feld massgebend für die Qualität der reproduzierbaren Elektrophorese ist. Zum Beispiel kann die Elektroden des Elektrodenpaars auf derselben Höhe angeordnet sein und im Wesentlichen auf die Position der Trägerplatte im geschlossen Zustand des Gelelektrophorese-Geräts abgestimmt sein, wobei die Position der Trägerplatte durch Niederhaltelemente bestimmt bzw. vorgegeben ist. Insbesondere kann das Elektrodenpaar auf der Höhe der Trägerplatte im geschlossen Zustand des Gelelektrophorese-Geräts abgeordnet sein.

Die Trägerplatten können beispielsweise auch derart angeordnet sein, dass die Gelspot-Seite, also die hydrophile Seite, der einen Trägerplatte der Unterseite der darüber oder darunter angeordneten Trägerplatte gegenüberliegt ("face-to-bottom"). Mit Unterseite wird die Flachseite einer Trägerplatte bezeichnet, die der Flachseite mit den Gelspots (auch Oberseite genannt) gegenüberliegt.

Weiterhin können die Trägerplatten vertikal oder horizontal in einer Ebene und/oder sandwich-artig übereinander oder nebeneinander angeordnet sein. In einer Ausführungsform ist die Anordnung matrixartig, das heisst in jeder Zeile sind gleichviele Trägerplatten anordbar und in jeder Spalte sind gleichviele Trägerplatten anordbar.

In einer weiteren Ausführungsform sind der Funktionsdeckel und die Niederhaltelemente derart ausgebildet, dass auch Trägerplatten aus Glas und/oder Objektträger im Funktionsdeckel der Gelelektrophorese-Kammer fixierbar sind. Alternativ können die Glasplatten und/oder Objektträger auch in der Kammer, vorzugsweise am Kammerboden, mit den entsprechend ausgebildeten Niederhaltelementen fixiert werden. Mit anderen Worten: Mindestens ein Niederhalteelement des Gelelektrophorese-Gerätes kann im Funktionsdeckel und/oder im Inneren der Kammer, insbesondere im und/oder am Boden der Kammer, angeordnet sein.

Zur Erzeugung eines elektrischen Felds über den Trägerplatten können Elektroden aus säure- oder alkaliresistentem Material wie Edelmetalle oder Edelmetallkombinationen, vorzugsweise Platin-Iridium verwendet werden.

In einer Ausführungsform wird beispielsweise je eine, vorzugsweise je zwei parallel zueinander verlaufende Elektroden auf gegenüber liegenden Innenwänden der Kammer derart angebracht, dass sich die Trägerplatten, unter Umständen mit den darauf befindlichen Gelspots, bei geschlossenem Kammerdeckel, also bei geschlossenem Funktionsdeckel, auf Höhe der Elektroden befinden, wodurch sich das elektrische Feld auf der Ebene der Gelspots bzw. der darin befindlichen Proben ausbildet. Bei einer im Grundriss rechteckig ausgebildeten Elektrophorese-Kammer können sich die Elektroden auf den einander gegenüberliegenden Seiten der Kammer befinden. Diese Anordnung von Trägerplatten und Elektroden gewährleistet ein gleichmässiges elektrisches Feld über den zu untersuchenden Proben.

In einer weiteren Ausführungsform umfasst das mindestens eine Niederhaltelement einen Kopfteil und mindestens einen Einrastabschnitt für die Fixierung mindestens einer Trägerplatte. Dadurch kann eine Trägerplatte im Elektrophoresetank positioniert werden.

Das Niederhaltelement kann im Wesentlichen pinartig ausgestaltet sein und in entsprechend kongruierend bzw. korrespondierend ausgestalte Öffnung der Trägerplatte eingreifen, wobei im positionierten Zustand der Trägerplatte der Einrastabschnitt des Niederhaltelement in den Öffnungen der Trägerplatte positioniert ist.

Das Kopfteil kann derart ausgestaltet sein, dass es durch den ersten Bereich einer schlüssellochförmigen Öffnung der Trägerplatte passt. Das Kopfteil kann durch diesen ersten Bereich der Öffnungen geschoben werden. Anschliessend kann der Einrastabschnitt, der einen kleiner Durchmesser aufweist als der Kopfteil im zweiten Bereich der schlüssellochförmigen Öffnung der Trägerplatte positioniert, bzw. eingerastet, werden.

In einer anderen Ausführungsform ist das Niederhaltelement schienenartig mit einer Nut als Einrastabschnitt ausgestaltet wobei der Randbereich der Trägerplatte in der Nut des Niederhaltelements einschiebbar, positionierbar ist. Der Kopfteil des Niederhaltelements ist als Abschlussfläche ausgebildet.

In einer weiteren Ausführungsform umfasst das mindestens eine Niederhaltelement einen ersten Einrastabschnitt für die Fixierung einer ersten Trägerplatte und einen zweiten Einrastabschnitt für die Fixierung einer zweiten Trägerplatte, einen Abstandhalter zwischen dem ersten Einrastabschnitt und dem zweiten Einrastabschnitt und einen Anker. Der Anker ist im Funktionsdeckel der Elektrophorese-Kammer verankerbar und/oder im bzw. am Boden der Kammer eines Gelelektrophorese-Geräts abstellbar bzw. positionierbar ist. Dadurch kann das Niederhaltelement relativ zur Kammer bzw. zum Elektrophoresetank positioniert werden. Der Abstandhalter ermöglicht eine präzise Positionierung von zwei Trägerplatten relativ zueinander. Auf diese Weise kann der Abstand von zwei Trägerplatte mit Hilfe des Abstandhalters auf die Position des Elektrodenpaar bzw. auf den Abstand der Elektrodenpaare abgestimmt werden, so dass beide Trägerplatten im homogenen elektrischen Feld anordenbar sind.

Der erste Einrastabschnitt und der zweite Einrastabschnitt können dabei identisch ausgebildet sein. Es ist auch möglich, dass der erste Einrastabschnitt abweichend vom zweiten Einrastabschnitt ausgebildet ist.

Der Einrastabschnitt ist derart ausgestaltet, dass die Trägerplatte am Einrastabschnitt einrastbar, bzw. einschnappbar, fixiert werden kann, also fixierbar bzw. positionierbar ist.

Der Einrastabschnitt kann pinartig bzw. zylindrisch ausgestaltet sein und die Öffnung der Trägerplatte kann entsprechend korrespondierend ausgestaltet sein. Es ist auch möglich, dass das Abstandselement als hohlzylindrisches Positionierungseinrastelement ausgestaltet ist. Das Positionierungseinrastelement kann federnde Eigenschaften aufweisen und über den Kopfteil und den Einrastabschnitt des Niederhaltelements gesteckt werden und die Trägerplatte so am Niederhaltelement fixiert werden.

Die Verbindung zwischen dem Niederhaltelement und der Trägerplatte kann druckknopfartig ausgebildet werden, wobei das Niederhaltelement in die Öffnung der Trägerplatte eingreift und so eine präzise Positionierung bzw. Fixierung ermöglicht wird. Es ist auch möglich, dass das Niederhaltelement in das Positionierungseinrastelement eingreift und auf diese Weise relative Positionierung und präzise Fixierung der Trägerplatte am Niederhaltelement realisierbar ist. Das Niederhaltelement und/oder das Positionierungseinrastelement kann leicht federnd bzw. dehnbar ausgestaltet sein um eine zerstörungsfreie, mehrmalige Positionierung zu ermöglichen.

In einer Ausführungsform weist das Gelelektrophorese-Gerät ein Trägerelement mit mindestens einem Niederhaltelement auf, welches im Elektrophoresetank, insbesondere in der Kammer, insbesondere am Boden der Kammer, positionierbar ist. Das Niederhaltelement ist dazu eingerichtet mindestens eine Trägerplatte in dem von dem mindestens einen Elektrodenpaar erzeugten homogenen elektrischen Feld zu positionieren. Das Trägerelement und das Niederhaltelement sind derart dimensioniert, dass eine am Niederhaltelement fixierte Trägerplatte im erzeugten homogenen elektrischen Feld des Elektrodenpaars bzw. der Elektrodenpaare bei geschlossenem Elektrophoresetank positioniert werden kann. Dadurch kann mindestens eine Trägerplatte mit Hilfe des Niederhaltelements am Funktionsdeckel und mindestens eine Trägerplatte mit Hilfe des Trägerelements im homogenen elektrischen Feld unabhängig voneinander positioniert werden. Dadurch kann ein erhöhter Probendurchsatz ermöglicht werden. Ein solches Trägerelement kann auch als Korb bezeichnet werden.

Das Trägerelement kann in die Kammer hineingestellt werden. Das Trägerelement kann eine Verdrehsicherung aufweisen. Am Boden der Kammer kann ebenfalls eine Verdrehsicherung angeordnet sein. Auf diese Weise kann das Trägerelement nur in einer spezifischen Orientierung relativ zur Kammer, bzw. zum Elektrophoresetank, in der Kammer angeordnet werden. Dadurch wird es möglich, dass eine am Trägerelement bzw. am Niederhaltelement fixierte Trägerplatte in nur einer spezifischen Orientierung relativ zum erzeugten homogenen, elektrischen Feld des Elektrodenpaars anzuordnen. Durch die Dimensionierung von Trägerelement und/oder Niederhaltelement kann die Position der Trägerplatte im positionierten Zustand definiert werden.

Das Trägerelement kann einen Trägergriff aufweisen, der im in der Kammer angeordneten Zustand aus dem Gelelektrophorese-Puffer herausragt. Dadurch kann ein Einsetzen des Trägerelements in die Kammer und ein Herausnehmen des Trägerelements aus der Kammer erleichtert werden.

Der Boden der Kammer kann ein Gefälle aufweisen, das dazu eingerichtet ist, dass sich beim Ablassen bzw. Wechseln des Gelelektrophorese-Puffers der Gelelektrophorese-Puffer am tiefsten Punkt des Gefälles, also einer Rinne, ansammelt. Auf diese Weise wird es möglich, dass sich der Gelelektrophorese-Puffer an diesem tiefsten, bzw. untersten Punkt des Gefälles bzw. des Bodens, also in der Rinne, sammelt wodurch das Ablassen bzw. Wechseln des Gelelektrophorese-Puffers erleichtert wird.

In einer weiteren Ausführungsform umfasst die Elektrophorese-Kammer, also die Kammer für die Aufnahme eines Gelelektrophorese-Puffers, bzw. das Gelelektrophorese-Gerät einen Wärmetauscher, der mit einer internen Heiz- und/oder Kühlvorrichtung gekoppelt ist, welche zum Beispiel über eine integrative Software reguliert bzw. gesteuert werden kann.

Eine Zirkulation des Puffers in der Kammer kann durch eine im Gelelektrophorese-Gerät integrierte Pumpe ermöglicht werden. Dabei bricht mindestens eine vertikal auf der Bodenplatte angebrachte Barriere mit Durchlässen den Pufferstrom über den Trägerplatten auf und ermöglicht eine gleichmässige Strömung über der mindestens einen Trägerplatte. Die Durchlässe der mindestens einen Barriere können in Form eines durchgehenden horizontalen Schlitzes und/oder mehrerer horizontaler oder vertikaler Schlitze und/oder horizontaler Röhren ausgebildet sein. Jede andere Form von Durchlässen ist ebenfalls möglich.

In einer weiteren Ausführungsform umfasst das Gelelektrophorese-Gerät mindestens eine Barriere, welche zur Erzeugung eines laminaren Pufferflusses eingerichtet ist. Insbesondere kann die Barriere auf einer Seite der Kammerwand angeordnet sein.

Die Kammerwand ist eine Wand der Kammer für die Aufnahme eines Gelelektrophorese-Puffers.

In einer weiteren Ausführungsform umfasst das Gelelektrophorese-Gerät mindestens eine Barriere aufweisend
- mindestens einen durchgehenden horizontal, das heisst parallel zu den Elektroden der Kammer und/oder parallel zum Boden der Kammer und/oder parallel zum Funktionsdeckel im geschlossen Zustand des Gelelektrophorese-Geräts, verlaufenden schlitzförmigen Durchlass und/oder
- mehrere kürzere schlitzförmige vertikal, das heisst senkrecht zu den Elektroden und/oder senkrecht zu dem Funktionsdeckel im geschlossenen Zustand und/oder senkrecht zum Boden der Kammer, verlaufende Öffnungen und/oder
- röhrenförmige Durchlässe aufweist.

Ein Verfahren zur Durchführung einer Einzelzell-Gelelektrophorese bzw. eines Comet-Assays kann die folgenden Schritte umfassen:
- Aufbringen eines Gelspots mit zu untersuchenden Zellen, z.B. mit Hilfe einer Einzel- oder Mehrkanal-Pipette, auf eine Trägerplatte;
- Positionieren einer Trägerplatten auf mindestens einem Niederhaltelement einer Elektrophorese-Kammer;
- Verschliessen eines Funktionsdeckels;
- Inkubation der Trägerplatten mit den aufgebrachten Gelspots in alkalischen Milieu zum DNS-Unwinding;
- Auswahl eines Elektrophoreseprogramms und Initiation einer Kontrolle der Elektrophorese-Parameter durch eine integrative Software zur Erzeugung eines homogenen Felds über der mindestens eine Trägerplatte;
- Öffnung des Funktionsdeckels und Entnahme der Trägerplatte;
- Überführen der Trägerplatte in eine Färbelösung;
- Trocknen der Gelspots in einem Lösungsmittel, insbesondere Alkohol, insbesondere Ethanol;
- Entnahme der Trägerplatte aus dem Färbetank und Überführen der Trägerplatte in eine Waschlösung, wobei der Färbetank ein Behälter mit der Färbelösung ist;
- optionales Trocknen der Gelspots auf der Trägerplatte ;
- manuelle oder teilautomatisierte oder automatisierte mikroskopische Auswertung der Gelspots.

Gegebenenfalls kann auch eine automatisierte Analyse zur Quantifizierung der Ergebnisse durchgeführt werden.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1a: Aufsicht auf eine Trägerplatte mit eckständigen runden Öffnungen;
- Figur 1b: Aufsicht auf eine Trägerplatte mit eckständigen ovalen Öffnungen;
- Figur 2a: Niederhaltelement für Trägerplatten mit seitlich abgeflachtem Abstandhalter;
- Figur 2b: Niederhaltelement für Trägerplatten wie Figur 2a, dargestellt ist eine nicht abgeflachte Seite des Abstandshalters;
- Figur 2c: Niederhaltelement für Trägerplatten mit eckigem Abstandshalter;
- Figur 2d: Niederhaltelement für Trägerplatten mit zweiseitig abgeflachten Abstandhalter;
- Figur 3: Zwei sandwichartig übereinander angeordnete Trägerplatten durch 4 Niederhaltelemente fixiert;
- Figur 4a: Gelelektrophorese-Gerät mit 3 × 2 im Funktionsdeckel fixierten Trägerplatten;
- Figur 4b: Gelelektrophorese-Gerät mit 3 x 2 in der Kammer befindlichen Trägerplatten;
- Figur 5a und Figur 5c: Ausschnitt aus der Kammerwand mit Befestigungsmittel für die paarweise angeordneten Elektroden;
- Figur 5b: Befestigungsmittel für paarweise angeordnete Elektroden;
- Figur 6a: Handlingrahmen mit eckständigen stiftförmigen Erhöhungen auf dreieckigen Basisteilen;
- Figur 6b: Handlingrahmen mit eckständigen stiftförmigen Erhöhungen auf runden Basisteilen;
- Figur 7a: Pipettierhilfe mit Pipettierblock und Rahmen und Öffnungen;
- Figur 7b: Aufsicht auf Pipettierhilfe mit Pipettenspitze;
- Figur 7c: Ansicht der Längsseite der Pipettierhilfe mit Metallrahmen und Trägerplatte;
- Figur 7d: Ansicht der Querseite der Pipettierhilfe mit Pipettierblock und Trägerplatte;
- Figur 8a: Barriere mit röhrenförmigen Durchlässen;
- Figur 8b: Barriere mit schlitzförmigen Durchlässen;
- Figur 9a, Figur 9b; Figur 9c: Aufsicht auf eine Trägerplatte;
- Figur 10a und Figur 10b: Trägerelement mit Trägerplatten;
- Figur 10c: Aufsicht auf einen Elektrophoresetank;
- Figur 10d: Elektrophoresetank mit eingesetztem Trägerelement;
- Figur 11: Querschnitt durch Elektrophoresetank im geschlossenen Zustand;
- Figur 12a und Figur 12b: Trägerplatte mit Öffnungen und Abstandselementen;
- Figur 12c: Elektrophoresetank mit am Funktionsdeckel positionierten Trägerplatten; und
- Figur 13: Elektrophoresetank mit schienenförmigen Niederhaltelementen.

Grundsätzlich sind in den Figuren gleiche oder analoge Teile mit gleichen Bezugszeichen versehen.

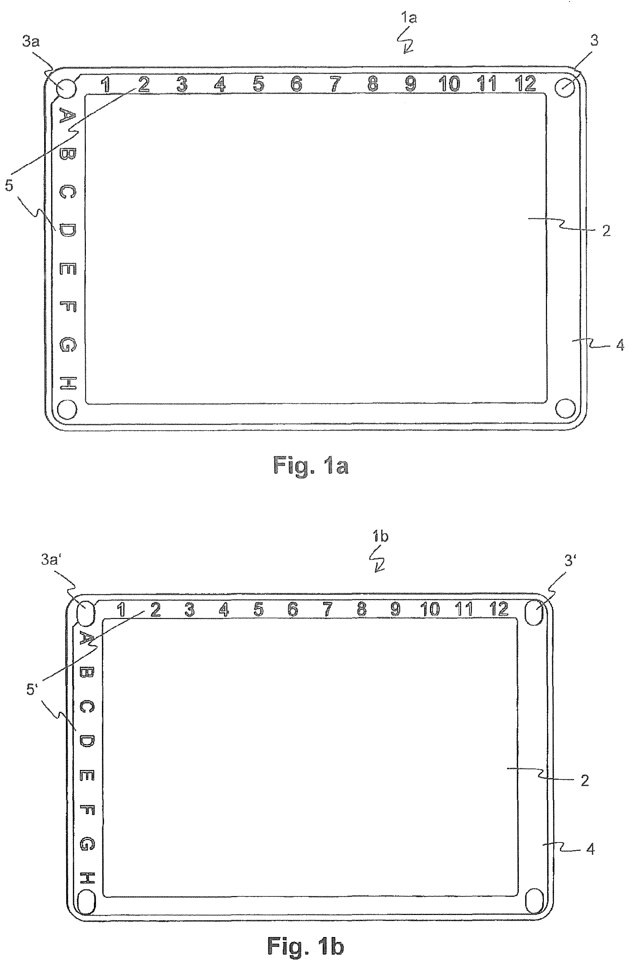

Figuren 1a und 1b zeigen eine Aufsicht auf eine rechteckige Trägerplatte 1a mit einer Folienfläche 2, einem Randbereich 4, welcher auf einer Längs- und einer Querseite mit Markierungen 5 versehen ist, die ein Raster für die auf die Folie aufzubringenden Gelspots vorgeben. Die Folienfläche ist eine planare Fläche der Trägerplatte auf der eine Polyester-Folie mit hydrophiler Oberfläche aufgebracht ist. Die Trägerplatte mit der planaren Fläche kann alternativ mit einer hydrophilen Schicht behandelt sein.

Die eckständigen Öffnungen 3 der Trägerplatte 1a sind in Figur 1a rund dargestellt, in Figur 1b als ovale Öffnungen 3'. Selbstverständlich sind weitere Ausführungsformen der Öffnungen 3, 3' wie beispielsweise quadratische oder rechteckige Öffnungen oder Öffnungen einer beliebigen Form möglich. Im Randbereich einer der eckständigen Öffnungen 3a ist die Trägerplatte 1 abgeschrägt. Diese Abschrägung passt schlüssig auf ein speziell dafür abgestimmtes Niederhaltelement und kennzeichnet die Orientierung der Trägerplatte 1 in der Kammer 7a bzw. bestimmt die Orientierung der Trägerplatte 1 in der Kammer 7a.

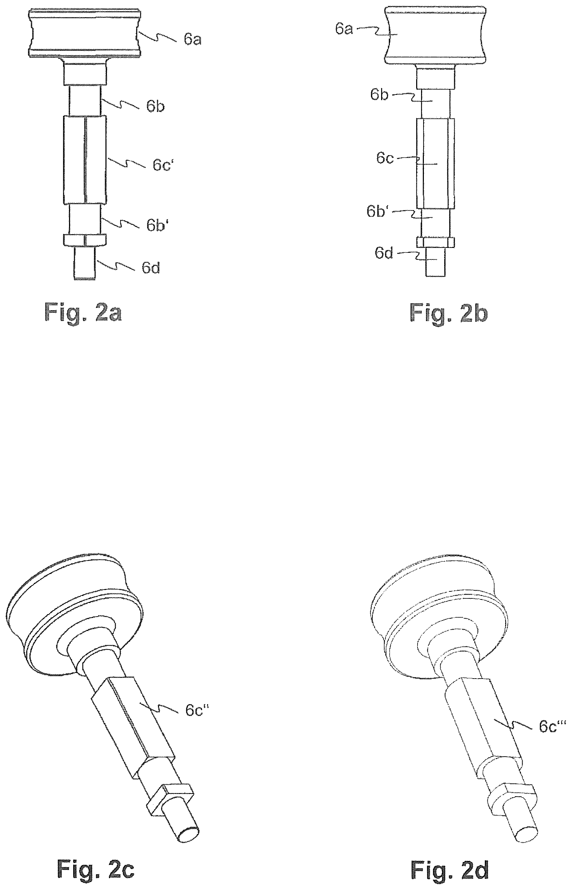

Figur 2a zeigt ein Niederhaltelement für die Fixierung der Trägerplatten 1 in einer Elektrophorese-Kammer, also in eine Kammer für die Aufnahme eines Gelelektrophorese-Puffers. Das Niederhaltelement 6 umfasst einen Kopfteil 6a, einen Einrastabschnitt 6b für die Fixierung einer ersten Trägerplatte 1, einen Einrastabschnitt 6b' für die Fixierung einer zweiten Trägerplatte, einen Abstandhalter 6c', der bei der Verwendung von zwei Trägerplatten diese auf Distanz hält, und einen Anker 6d, der im Funktionsdeckel der Elektrophorese-Kammer verankerbar oder aber im Boden der Kammer eines Gelelektrophorese-Geräts abstellbar bzw. positionierbar ist.

Der Abstandhalter 6c' ist in Figur 2a mit einer abgeflachten Seite dargestellt. Figur 2b zeigt die gegenüberliegende gewölbte Seite des Abstandshalters 6c.

Figur 2c zeigt einen Abstandhalter 6c"in eckiger Ausführungsform, mit vier abgeflachten Seiten, und in Figur 2d ist eine Ausführungsform eines Abstandhalters 6c‴ mit zwei abgeflachten und zwei gewölbten Seiten dargestellt.

Der Kopf 6a und/oder der Abstandhalter 6c, 6c', 6c", 6c‴ eines Niederhaltelements 6 kann als Messelektrode ausgebildet sein.

Bei der Verwendung von mehr als einem Niederhaltelementes 6 kann sich zum Beispiel einer der Abstandhalter bezüglich seiner Ausführungsform von anderen Abstandhaltern unterscheiden. Ein solcher kann zum Beispiel an eine Öffnung und/oder deren Umgebung einer Trägerplatte, die von den anderen Öffnungen und/oder Umgebungen der Trägerplatte abweicht angepasst sein. Dadurch kann eine immer gleiche Orientierung der mindestens einen Trägerplatte 1 in dem Funktionsdeckel oder dem Boden der Elektrophorese-Kammer gewährleistet werden.

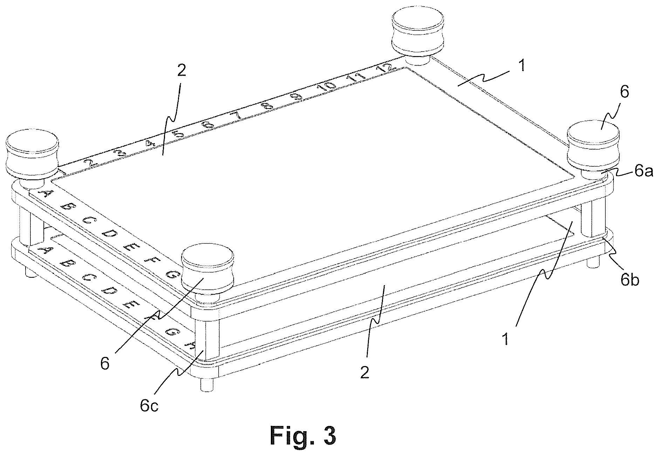

Figur 3 zeigt zwei Trägerplatten 1 und vier Niederhaltelemente 6 im montierten Zustand. Die beiden Trägerplatten 1 sind mittels vier Niederhaltelementen 6 übereinander montiert. Die erste Trägerplatte 1 ist mittels ihrer Öffnungen in den ersten Einrastabschnitten 6b der vier Niederhaltelemente und die zweite Trägerplatte 1 ist mittels ihrer Öffnungen in den zweiten Einrastabschnitten der vier Niederhaltelemente 6 fixiert. Distanzhalter 6c gewährleisten einen konstanten Abstand zwischen den Trägerplatten 1. Die beiden Trägerplatten sind in diesem Ausführungsbeispiel derart fixiert, dass sich die Folien 2 mit den darauf aufgebrachten Gelspots "face to back" angeordnet sind. In einer alternativen Ausführungsform sind die Trägerplatten 1 derart in den Niederhaltelementen 6 befestigt, dass sich die Folien 2 mit den Gelspots einander gegenüberliegen (face-to-face).

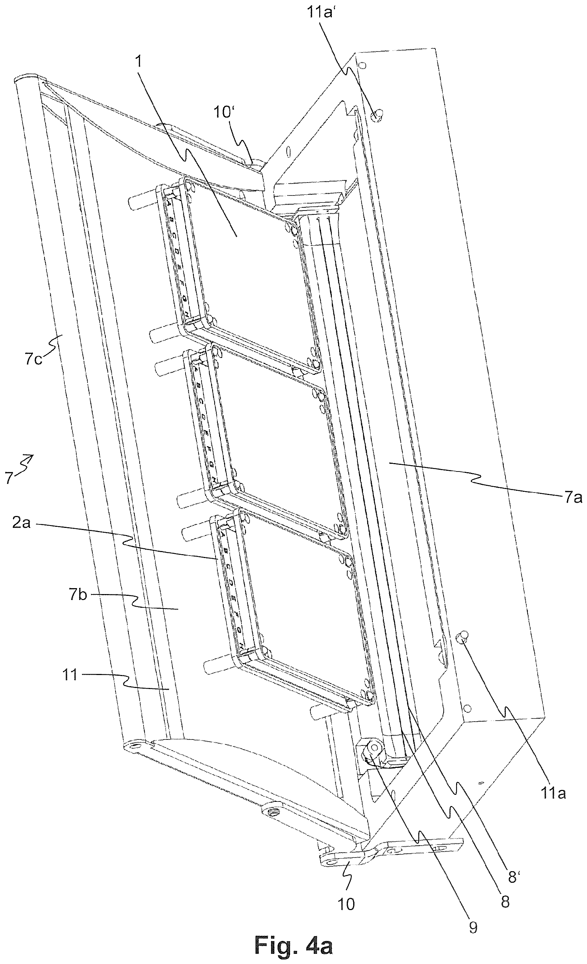

Figur 4a zeigt einen Elektrophoresetank 7 umfassend eine Elektrophorese-Kammer 7a, also eine Kammer für die Aufnahme eines Gelelektrophorese-Puffers, einen Funktionsdeckel 7b und einen Griff 7c. Die Elektrophorese-Kammer 7a umfasst im Innenraum an einer Längsseite je zwei parallel verlaufende Elektrodenpaare 8 und 8' aus einem alkaliresistenten Material wie beispielsweise Platin-Iridium. Die Elektrodenpaare sind als Elektrodendrähte ausgestaltet und sind über Befestigungsmittel 9 in der Elektrophorese-Kammer 7a fixiert. Gleichzeitig dienen die Befestigungsmittel 9 als Verbindung zwischen Elektrode und Stromquelle, insbesondere als leitende Verbindung.

Wenn der Funktionsdeckel 7b geschlossen ist, befinden sich die Elektrodenpaare 8 und 8' in Höhe des Zwischenraums zwischen den Trägerplatten lbzw. den darauf befindlichen Folien mit den Gelspots.

Der Funktionsdeckel 7b des Elektrophoresetanks 7 umfasst auf seiner zur Elelektrophorese-Kammer gerichteten Seite zwölf Niederhaltelemente, die am Deckel 7b fixiert sind. Die Niederhaltelemente sind in drei Gruppen zu vier Niederhaltelementen 6 angeordnet. Pro Gruppe Niederhaltelemente sind zwei Trägerplatten "face to face", d.h. mit der Folie oder der mit hydrophilen Schicht behandelten Fläche und den darauf befindlichen Gelspots zueinander, fixiert. Für die Niederhaltelemente sind im Deckel der Elektrophorese-Kammer Öffnungen eingebracht bzw. angeordnet, in die der Anker eines Niederhaltelements einführbar und befestigbar ist.

Der Funktionsdeckel umfasst weiterhin einen Griff 7c zum Öffnen und Schliessen der Elelektrophorese-Kammer 7a. Der Funktionsdeckel 7b ist auf zwei Querseiten mit der Elektrophorese-Kammer 7a mittels Scharniergelenken 10, 10' verbunden. Diese Scharniergelenke 10, 10' können arretierbar sein.

Des Weiteren umfasst der Elektrophoresetank 7 auf einer Längsseite der Elektrophorese-Kammer 7a und auf einer Längsseite des Funktionsdeckels 7b Teile eines Schliessmechanismus 11, 11a, 11a'. Der Schliessmechanismus kann beispielsweise einen Magnet umfassen.

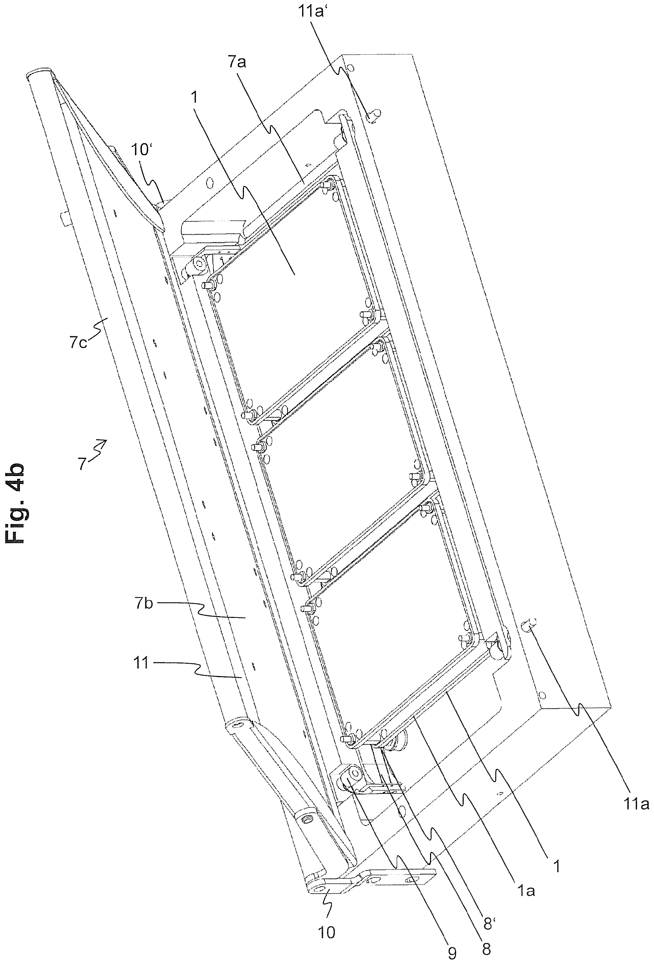

Figur 4b zeigt einen Elektrophoresetank 7 umfassend eine Elektrophorese-Kammer 7a, einen Funktionsdeckel 7b und einen Griff 7c. Die Elektrophorese-Kammer 7a weist im Innenraum an einer Längsseite zwei parallel verlaufende Elektroden 8 und 8' aus einem elektrochemisch edlen Material wie beispielsweise Platin-Iridium auf. Die Elektrodendrähte sind über Befestigungsmittel 9 in der Elektrophorese-Kammer 7a fixiert. Gleichzeitig dienen die Befestigungsmittel 9 als Verbindung zwischen Elektrode und Stromquelle.

Im Gegensatz zu Figur 4a sind die in Figur 4b gezeigten Trägerplatten 1 mittels Niederhaltelementen im bzw. am Boden der Elektrophorese-Kammer befestigt. Hierzu sind in dem Boden der Elektrophorese-Kammer Öffnungen eingebracht, in die der Anker des Niederhaltelements 6 einführbar und befestigbar ist. Die Niederhaltelemente können auch unbefestigt in der Kammer sein und auf den Boden der Kammer gestellt werden.

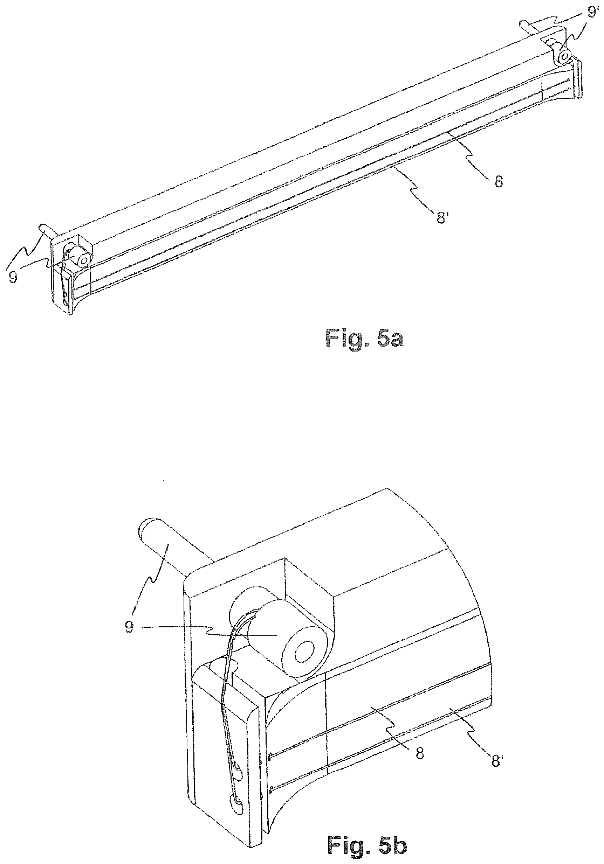

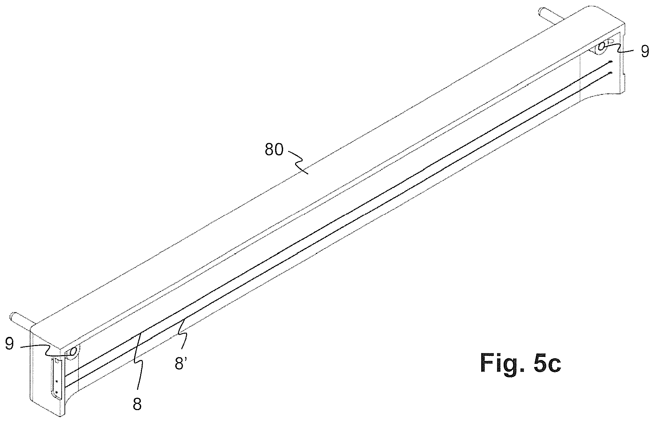

Figur 5a zeigt einen Ausschnitt einer Längsseite der Elektrophorese-Kammer aus einem der beiden Figuren 4a oder 4b mit den beiden an der Längsseite parallel verlaufenden Elektroden der Elektrodenpaare 8 und 8' und einem Befestigungsmittel 9 und 9' für die Elektroden 8 und 8'. Figur 5c zeigt einen ähnlichen Ausschnitt einer Längsseite der Elektrophorese-Kammer 7a. Die Elektrodenpaare 8, 8' sind mit einem Schutzelement 80 abgedeckt um einen versehentlichen Kontakt mit einem Elektrodenpaar 8 zu verhindern.

Figur 5b zeigt einen vergrösserten Ausschnitt der Längsseite der Elektrophorese-Kammer aus einer der beiden Figuren 4a oder 4b mit einem Befestigungsmittel 9. Die Elektrodrähte 8 und 8' sind durch einen Durchlass durch eine quer bzw. senkrecht zur Längsseite liegende Querwand und von dort durch eine Vertiefung im Befestigungsmittel 9 geführt und fixiert. Das Befestigungsmittel 9 führt von der Innenseite der Längsseite durch eine Öffnung auf die Aussenseite der Längsseite und ist dort mit einer Stromquelle verbunden.

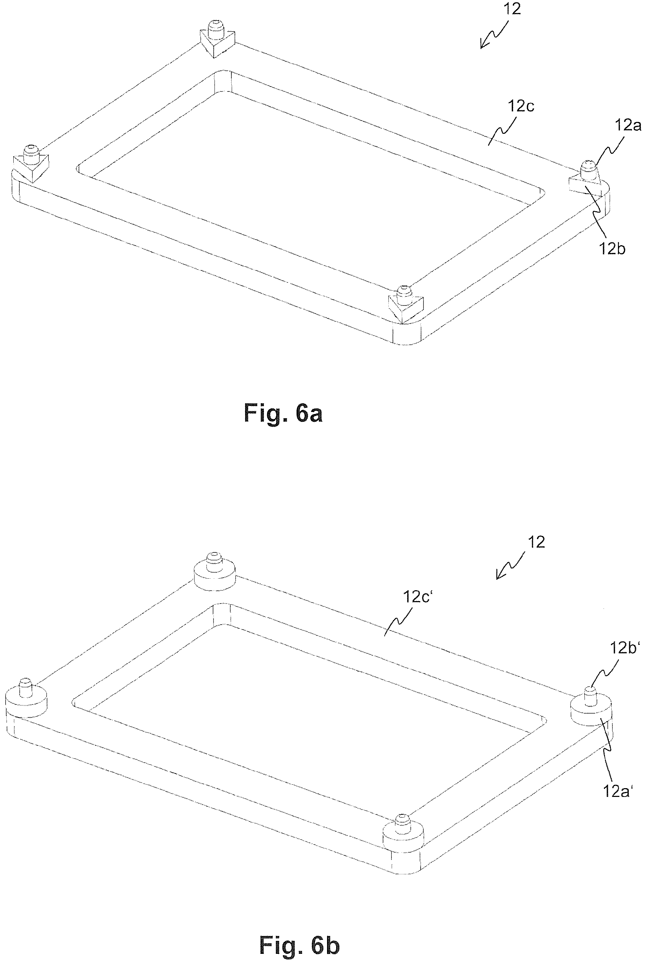

Figur 6a zeigt einen Handlingrahmen 12, welcher eckständig dreieckige Erhöhungen 12b, also eine Erhöhung mit einem dreieckigen Querschnitt, aufweist, wobei die Erhöhungen 12b mittig jeweils eine stiftförmliche Verlängerung 12a aufweisen, die einrastbar bzw. schlüssig in dafür vorgesehene Öffnungen einer Trägerplatte passen. Nach dem Einrasten ist die Trägerplatte mit dem Handlingrahmen 12 fest verbunden.

Figur 6b zeigt eine weitere mögliche Ausführungsform eines Handlingrahmens 12 mit runden eckständigen Erhöhungen 12a' und jeweils einer darin mittigen stiftförmigen Verlängerung 12b'.

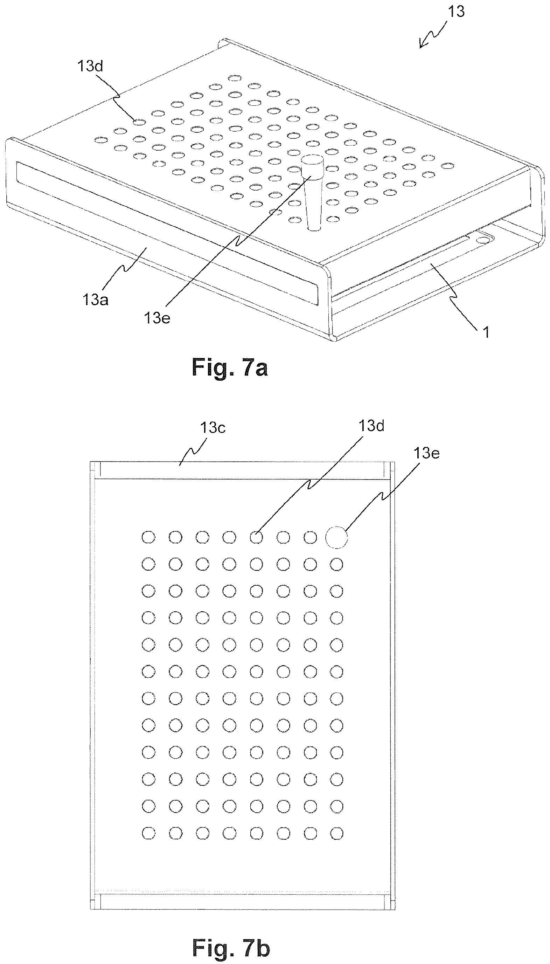

Figur 7a zeigt eine Perspektivsicht auf eine Pipettierhilfe 13 mit einem Pipettierblock mit 96 konischen Öffnungen. Der Pipettierblock ist im Bereich einer Längsseite nicht lösbar, also fest, mit einem Rahmen 13a verbunden. Im Bereich von quer zur Längsseite verlaufenden Querseiten ist der Pipettierblock um 0.5 bis 1 cm kürzer als der ihn umgebende Rahmen. Mit anderen Worten: Der Pipettierblock ist in einer Dimension kleiner als der Rahmen.

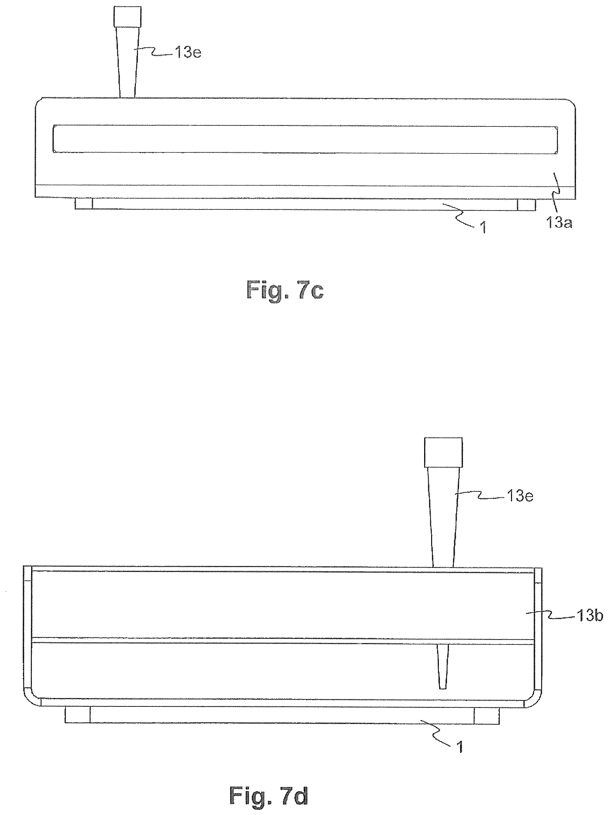

Figur 7d zeigt eine Aufsicht auf eine der Querseiten der Pipettierhilfe. Der Pipettierblock 13b ist nicht lösbar mit dem Rahmen verbunden. Zwischen dem Pipettierblock 13b und dem unteren Teil des Rahmens befindet sich ein Zwischenraum.

Figur 7b stellt die Oberseite der Pipettierhilfe dar. Der Rahmen 13a ist nicht durchgängig ausgebildet, wie in Figur 7a gezeigt, sondern weist im Bereich der Unterseite der Pipettierhilfe 13 eine Aussparung in der Grösse einer Trägerplatte 1 auf. Für das Pipettieren der Gelspots auf die Folie ist die Pipettierhilfe mit der Aussparung auf die Trägerplatte aufsetzbar und dort rutschfest fixierbar.

Figur 7c ist eine Seitenansicht der Längsseite der Pipettierhilfe und zeigt den Rahmen mit einer seitlichen Aussparung, wodurch der Pipettierblock sichtbar ist.

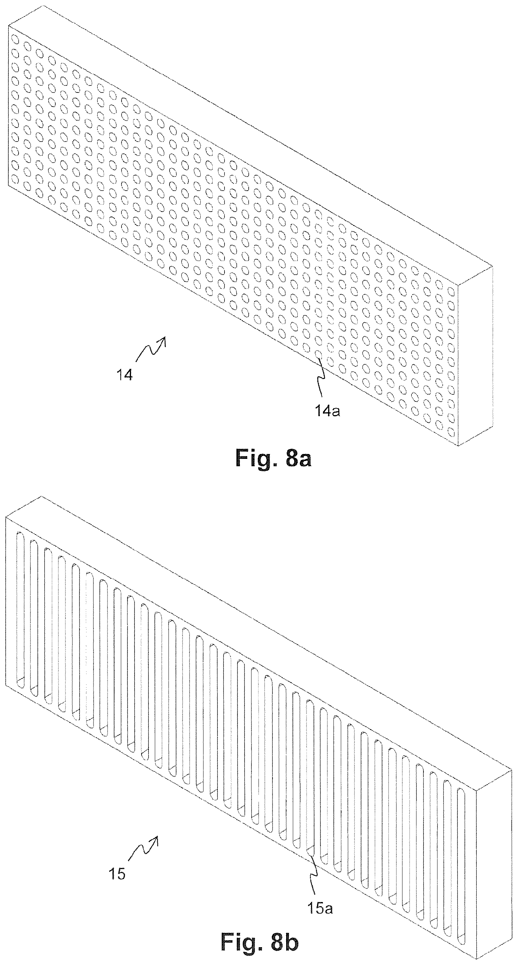

Figur 8a zeigt eine Barriere 14 für die Kontrolle des Pufferflusses mit röhrenförmigen Durchlässen 14a, welche zum Beispiel in einer Seitenwand einer Elektrophorese-Kammer angebracht werden kann. Der aus einem Schlauch (nicht gezeigt), zum Beispiel von einem Heiz- und/oder Kühlsystem, zugeführte Pufferstrom wird durch die röhrenförmigen Öffnungen geleitet, aufgebrochen und damit homogenisiert.

Figur 8b zeigt eine alternative Barriere 15 für die Kontrolle des Pufferflusses mit, wenn die Barriere an einer Seitenwand der Elektrophorese-Kammer angebracht ist, senkrecht zum Boden der Elektrophorese-Kammer ausgerichteten schlitzförmigen Durchlässen 15a.

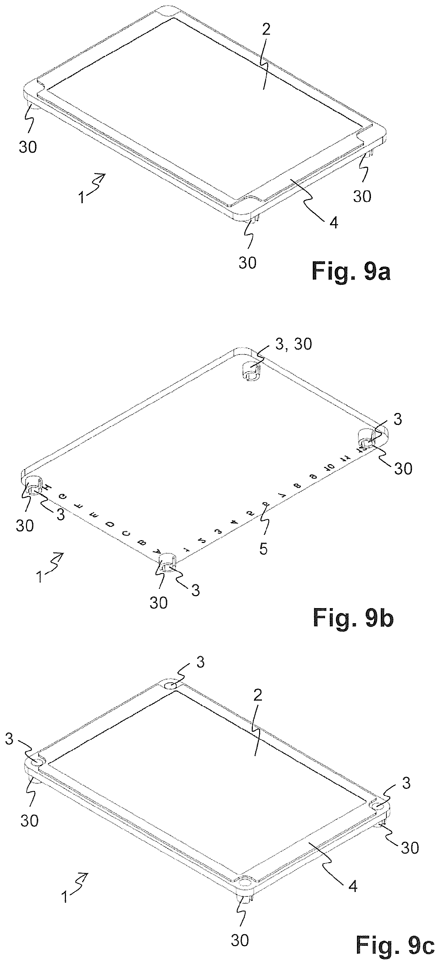

In Figur 9a ist eine Aufsicht auf die hydrophile Seite einer Trägerplatte 1 gezeigt. Figur 9b zeigt die der hydrophilen Seite abgewandte Seite der Trägerplatte 1. Auf der hydrophilen Seite der Trägerplatte 1 ist eine Polyester-Folie 2 angeordnet, welche sich bis in den Randbereich 4 der Trägerplatte 1 erstreckt. Die Eckbereiche der Trägerplatte 1 sind frei von Polyester-Folie 2. Auf der der Polyester-Folie 2 entgegensetzten Seite der Trägerplatte 1 sind vier Abstandselement 30 angeordnet, die jeweils eine Öffnung 3 hohlzylinderförmig umschliessen. Dabei sind die beiden Abstandselemente 30 im Randbereich 4 der Querseite der Trägerplatte 1 mit Markierungen 5 weiter voneinander entfernt als die beiden Abstandselemente 30, die im Randbereich 4 der gegenüberliegenden Querseite des Trägerplatte 1 angeordnet sind. Die asymmetrische Anordnung der hohlzylinderartigen Abstandselement 30 ermöglicht eine orientierungsspezifische Positionierung der Trägerplatte 1 am Funktionsdeckel 7b und/oder in der Kammer 7a.

Die hohlzylinderartigen Abstandselement 30 weisen einen Schlitz auf, der sich im Wesentlichen entlang einer Längsachse des Abstandselements 30 erstreckt. Durch diesen Schlitz weist das Abstandselement 30 elastische bzw. federnde Eigenschaften auf, die eine mehrmalige, zerstörungsfreie Positionierung der Trägerplatte 1 am Niederhaltelement 6 ermöglicht.

In Figur 9c ist eine alternative Ausführungsform einer Trägerplatte 1, wie in Figur 9a gezeigt, dargestellt. Dabei wiest die Trägerplatte 1 durchgehende Öffnungen 3 auf, die ähnlich wie in Figur 9a und 9b, von einem hohlzylinderförmigen Abstandselement 30 umgeben sind. Im Gegensatz dazu sind die Öffnungen 3 der Trägerplatte 1 in Figur 9a und 9b nicht durchgehend, sondern als Sacklöcher ausgebildet. Wie in Figur 9c gezeigt, können die Öffnungen 3 und Abstandselemente 30 symmetrisch im Eckbereich der Trägerplatte 1 angeordnet.

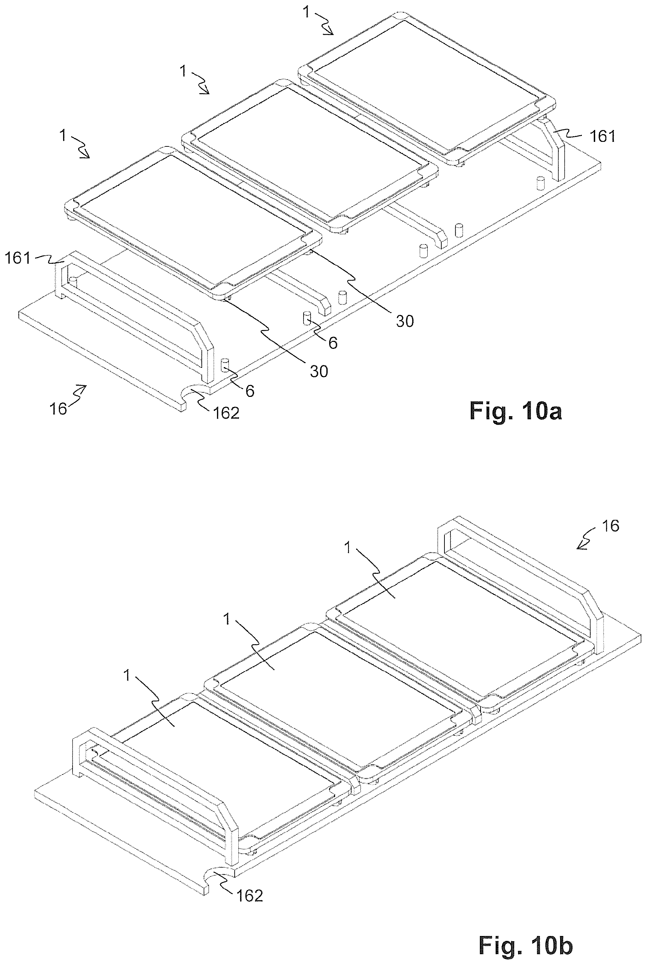

Figuren 10a und 10b zweigen eine auf ein Trägerelement 16 mit jeweils drei Trägerplatten 1, wie in Figur 9a und 9b gezeigt. Das Trägerelement 16 weist zwölf Niederhaltelemente 6 auf, die derart ausgestaltet sind, dass die drei Trägerplatten 1 aufzunehmen und zu positionieren, also relativ zum Trägerelement 16 zu fixieren. Figur 10b zeigt die Trägerplatte 1 im positionierten Zustand auf dem Trägerelement 16. Die Abstandselemente 30 umgreifen die Niederhaltelemente 6 und mit Hilfe der Niederhaltelemente 6 können die Trägerplatten 1 im homogenen, elektrischen Feld der Elektrodenpaare 8 in der Kammer 7a positioniert werden. Die Polyester-Folie 2, also die hydrophile Seite der Trägerplatte 1, ist auf der dem Trägerelement 16 abgewandten Seite angeordnet. Das Trägerelement 16 weist eine Verdrehsicherung 162 die eine spezifische, orientierungsselektive Anordnung des Trägerelements 16 in der Kammer 7a ermöglicht. Das Trägerelement 16 weist zwei Trägergriffe 161 auf die ein Anordnen der Trägerelement 16 in der Kammer 7a des Elektrophoresetanks 7 erleichtern.

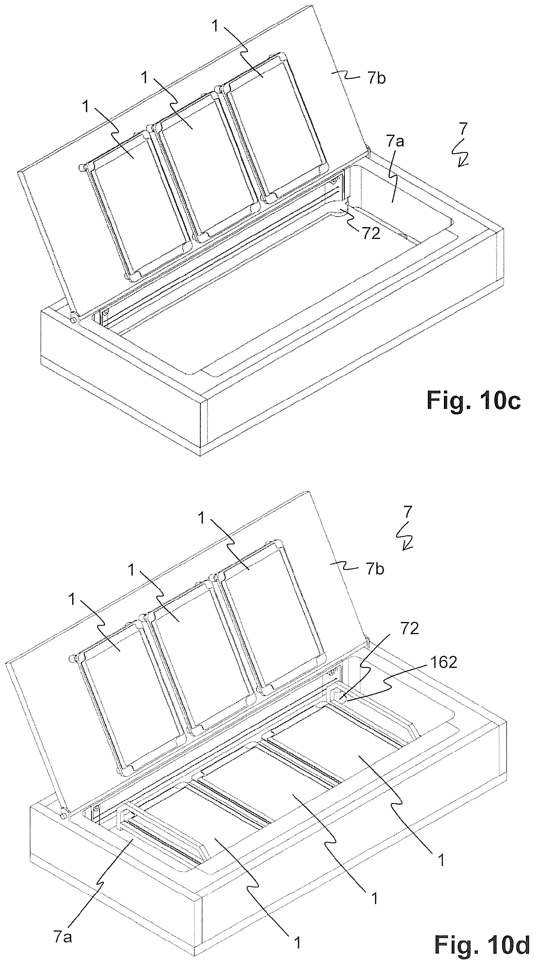

Figur 10c zeigt ein Gelelektrophorese-Gerät im geöffneten Zustand, also mit offenen Funktionsdeckel 7b. Am Funktionsdeckel 7b sind drei Trägerplatten 1 positioniert, welche an entsprechenden Niederhaltelementen 6 fixiert bzw. positioniert sind. Am Boden der Kammer 7a ist eine Verdrehsicherung 72 angeordnet, die zur Verdrehsicherung 162 des Trägerelements 16 korrespondiert.

Figur 10d zeigt das Trägerelement 16 mit darauf positionierten Trägerplatten 1 , welches in den Elektrophoresetank 7, insbesondere in die Kammer 7a, wie in Figur 10c gezeigt, eingesetzt ist. Die Verdrehsicherung 162 des Trägerelements 16 greift im Wesentlichen passgenau in die Verdrehsicherung am Boden der Kammer 72 ein. Dadurch wird die spezifische, orientierungsselektive Anordnung des Trägerelements 16 in der Kammer 7a sichergestellt. Damit sind sechs Trägerplatten 1 mit Hilfe von entsprechenden Niederhaltelementen 6 am Elektrophoresetank 7 positioniert.

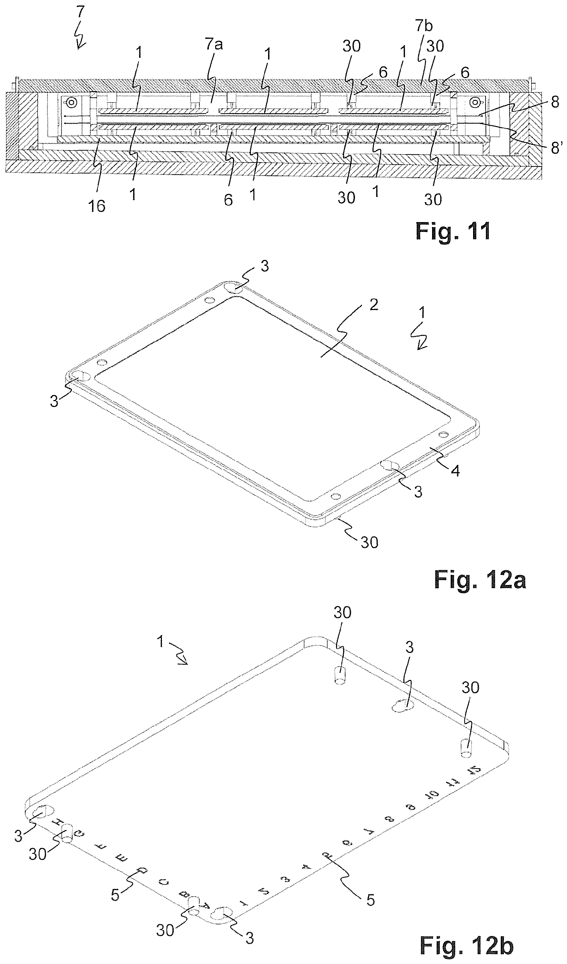

Figur 11 zeigt den Querschnitt durch einen Elektrophoresetank im geschlossenen Zustand, ähnlich wie in Figur 10d jedoch mit geschlossenem Funktionsdeckel 7b. Drei Trägerplatten 1 sind am Funktionsdeckel 7b mit Hilfe von Niederhaltelementen 6 fixiert bzw. positioniert. Drei weitere Trägerplatten 1 sind am Trägerelement 16 mit Hilfe von Niederhaltelementen 6 fixiert bzw. positioniert. Das Trägerelement 16 ist am Boden der Kammer 7a angeordnet. Das Trägerelement 16 ist mit Hilfe der Verdrehsicherung 162 und der Verdrehsicherung am Boden der Kammer 72, orientierungsspezifisch in der Kammer 7a angeordnet. Die Trägerplatten 1 sind in eine "face-to-face"-Anordnung im Elektrophoresetank 7 positioniert, wobei das von den Elektrodenpaaren 8, 8' erzeugte im Bereich der hydrophilen Fläche der Trägerplatte 1 am homogensten ist. Wie in Figur 11 gezeigt sind die Trägerplatten 1 im Wesentlichen auf der Höhe der Elektrodenpaaren 8, 8' angeordnet, wenn das Trägerelement 16 mit den positionierten Trägerplatten 1 in die Kammer 7a eingesetzt ist und der Funktionsdeckel 7b mit den positionierten Trägerplatten 1 geschlossen ist.

Der Boden der Kammer 7a weist ein leichtes Gefälle auf, wie in Figur 11 zu sehen. Dadurch kann der Gelelektrophorese-Puffers einfacher aus der Kammer 7a abgelassen werden, bzw. im Wesentlichen Rückstandsfrei gewechselt werden.

Figur 12a und 12b zeigt eine Ansicht einer Trägerplatte 1 mit Öffnungen 3 und Abstandselementen 30. Ähnlich wie in Figur 9, sind die Öffnungen 3 und die Abstandselement 30 im Randbereich 4 der Trägerplatte 1 angeordnet. Die Öffnungen 3 weisen einen schlüssellochförmigen Querschnitt mit einem ersten Bereich und einen zweiten Bereich auf. Der erste Bereich weist einen grösseren Durchmesser auf als der zweite Bereich, wobei der erste Bereich an den zweiten Bereich angrenzt. Mit anderen Worten: der erste Bereich ist im Wesentlichen kreisförmig und der zweite Bereich ist als sich an den ersten Bereich anschliessende Ausbuchung ausgebildet. Auf der der hydrophilen Seite abgewandten Seite der Trägerplatte 1 sind vier Abstandselement 30 im Randbereich 4 der gegenüberliegenden Querseiten angeordnet (siehe Fig.12b). Die Abstandselement 30 dienen der einfachen Stapelung von Trägerplatten 1 übereinander, wobei die Abstandselement 30 einer ersten Trägerplatte 1 im Randbereich 4 einer zweiten Trägerplatte 1 platzsparend abgestellt werden können ohne auf der hydrophilen Seite aufgebrachte Proben/Gelspot zu beschädigen.

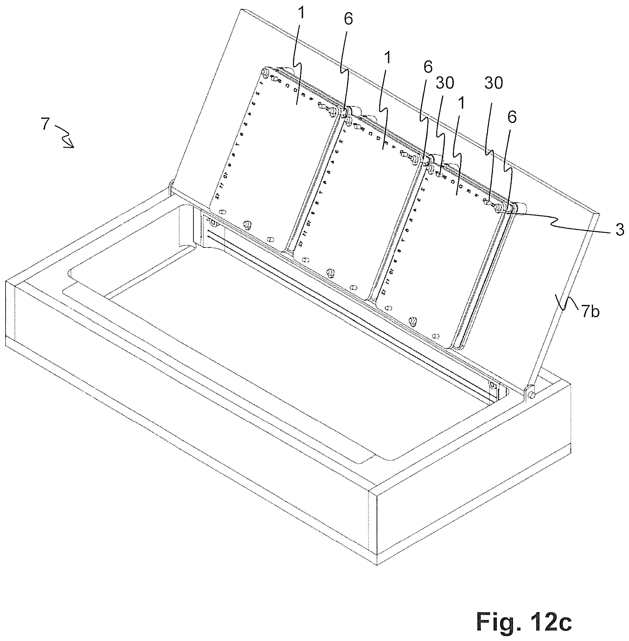

Figur 12c zeigt einen Elektrophoresetank 7 mit am Funktionsdeckel 7b positionierten Trägerplatten 1, wie in Figur 12a und 12b gezeigt. Das Niederhaltelement 6 welches am Funktionsdeckel 7b fixiert bzw. befestigt ist, ist im Wesentlichen pinartig bzw. pilzartig ausgestaltet sein und kann in entsprechend kongruierend bzw. korrespondierend ausgestalte Öffnungen 3 der Trägerplatte 1 eingreifen, wobei im positionierten Zustand der Trägerplatte 1 der Einrastabschnitt 6b des Niederhaltelement 6 in den Öffnungen 3 der Trägerplatte 1 positioniert ist.

Das Kopfteil 6a ist derart ausgestaltet, dass es durch den ersten Bereich einer schlüssellochförmigen Öffnung 3 der Trägerplatte 1 passt. Das Kopfteil kann durch diesen ersten Bereich der Öffnungen 3 geschoben werden. Anschliessend kann der Einrastabschnitt 6b, der einen kleiner Durchmesser aufweist als der Kopfteil 6a im zweiten Bereich der schlüssellochförmigen Öffnung 3 der Trägerplatte 1 positioniert, bzw. eingerastet, werden.

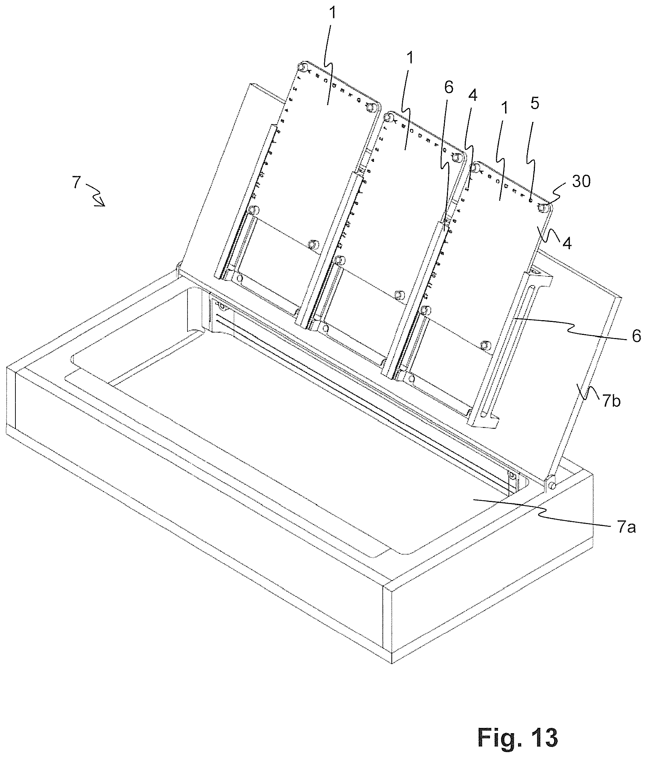

In Figur 13 ist das Niederhaltelement 6 schienenartig mit einer Nut als Einrastabschnitt 6b ausgestaltet, wobei der Randbereich 4 der Trägerplatte 1 in der Nut des Niederhaltelements einschiebbar bzw. positionierbar ist. Der Kopfteil 6a des Niederhaltelements 6 ist als Abschlussfläche ausgebildet.

## Patentansprüche

1. Gelelektrophorese-Gerät für Einzelzell-Gelelektrophoresen mit einer hohen Reproduzierbarkeit, wobei das Gelelektrophorese-Gerät
- eine Kammer (7a) für die Aufnahme eines Gelelektrophorese-Puffers,
- einen Funktionsdeckel (7b) zum Schliessen der Kammer,
- mindestens ein Elektrodenpaar (8, 8') zur Erzeugung eines homogenen elektrischen Feldes in der Kammer,
- mindestens eine Trägerplatte (1),
- mindestens ein Niederhaltelement (6) zur Aufnahme und Positionierung der mindestens einen Trägerplatte (1) umfasst,
**dadurch gekennzeichnet, dass**
das Gelelektrophorese-Gerät eine vom mindestens einen Elektrodenpaar (8, 8') verschiedene Messelektrode für die Messung eines elektrischen Felds des mindestens einen Elektrodenpaars (8, 8') umfasst, und wobei das mindestens eine Niederhaltelement (6) dazu eingerichtet ist die mindestens eine Trägerplatte (1) in dem von dem mindestens einen Elektrodenpaar (8, 8') erzeugten homogenen elektrischen Feld zu positionieren, und die mindestens eine Trägerplatte (1) derart aufzunehmen, dass die Trägerplatte (1) in der Kammer (7a) frei vom Gelelektrophorese-Puffer umspülbar ist.

2. Gelelektrophorese-Gerät nach Anspruch 1, wobei die Trägerplatte (1) eine planare Fläche aufweist.

3. Gelelektrophorese-Gerät nach Anspruch 1, wobei das mindestens eine Niederhaltelement (6) im Funktionsdeckel (7b) und/oder am Boden der Kammer (7a) angeordnet ist.

4. Gelelektrophorese-Gerät nach einem der Ansprüche 1 bis 3, wobei das mindestens eine Niederhaltelement (6) als die Messelektrode für die Messung eines elektrischen Felds ausgebildet ist.

5. Gelelektrophorese-Gerät nach einem der Ansprüche 1 bis 4, wobei das mindestens eine Niederhaltelement (6) einen Kopfteil (6a) und mindestens einen Einrastabschnitt (6b) für die Fixierung mindestens einer Trägerplatte (1) umfasst.

6. Gelelektrophorese-Gerät nach einem der Ansprüche 1 bis 5, wobei mindestens eine Barriere (14, 15) zur Erzeugung eines laminaren Pufferflusses auf einer Seite der Kammerwand angeordnet ist.

7. Gelelektrophorese-Gerät nach einem der Ansprüche 1 bis 6, wobei das Gelelektrophorese-Gerät ferner ein Trägerelement (16) aufweist,
- wobei das Trägerelement das mindestens eine Niederhaltelement (6) zur Aufnahme und Positionierung von mindestens einer Trägerplatte (1) aufweist, und
- das Trägerelement (16) in der Kammer (7a) positionierbar ist.

8. Gelelektrophorese-Gerät nach Anspruch 7, wobei das Trägerelement 16 eine Verdrehsicherung 162 aufweist und wobei am Boden der Kammer 7a eine korrespondierende Verdrehsicherung 72 am Boden der Kammer angeordnet ist.

9. Gelelektrophorese-Gerät nach einem der Ansprüche 1 bis 8,
wobei die Trägerplatte (1) eine planare Fläche aufweist und
- auf der planaren Fläche eine Polyester-Folie (2) mit hydrophiler Oberfläche aufgebracht ist und/oder
- die planare Fläche mit einer hydrophilen Schicht behandelt ist.

10. Gelelektrophorese-Gerät nach Anspruch 9, wobei die Trägerplatte (1) ein alkali-resistentes Material mit einer Bruchfestigkeit von mindestens 15 bis 20 Newton aufweist.

11. Gelelektrophorese-System für Einzelzell-Gelelektrophoresen mit einer hohen Reproduzierbarkeit, **dadurch gekennzeichnet, dass** das Gelelektrophorese-System:
- ein Gelelektrophorese-Gerät nach einem der Ansprüche 1 bis 10 und
- ein integriertes Mittel zur Temperaturkontrolle und/oder
- ein integriertes Mittel zur Kühlung und Wärmeerzeugung und/oder
- ein integriertes Mittel zur Pufferzirkulation und/oder
- ein integriertes Spannungserzeugungsgerät und/oder
- ein integriertes Netzanschlussgerät und/oder
- ein nachgelagertes, integriertes und automatisiertes Analysevorrichtung zur Quantifizierung der Ergebnisse und/oder
- eine digitale Schnittstelle zur weiteren Verarbeitung der Resultate
aufweist.

12. Gelelektrophorese-System gemäss Anspruch 11, welches das integrierte Spannungserzeugungsgerät aufweist,
und ferner aufweisend
- das Mittel zur Kühlung und Wärmeerzeugung und/oder
- das Mittel zur Pufferzirkulation

13. Verfahren zur Durchführung eines Comet-Assays unter Verwendung des Gelelektrophorese-Systems gemäss Anspruch 12,
wobei eine integrierte Software auf Grundlage der Daten der Messelektrode des Gelelektrophorese-Gerätes
- das Spannungserzeugungsgerät steuert und/oder reguliert.

## Claims

1. Gel electrophoresis apparatus for single cell gel electrophoresis with a high reproducibility, wherein the gel electrophoresis apparatus comprises
- a chamber (7a) for receiving a gel electrophoresis buffer,
- a functional lid (7b) for closing the chamber,
- at least one pair of electrodes (8, 8') for generating a homogeneous electric field in the chamber,
- at least one carrier plate (1),
- at least one hold-down element (6) for receiving and positioning the at least one carrier plate (1),
**characterized in that** the gel electrophoresis apparatus comprises a measuring electrode different from the at least one pair of electrodes (8, 8') for measuring an electric field of the at least one pair of electrodes (8, 8') and wherein the at least one holding-down element (6) is adapted to position the at least one carrier plate (1) in the homogeneous electric field generated by the at least one pair of electrodes (8, 8'), and to receive the at least one carrier plate (1) in such a way that the carrier plate (1) in the chamber (7a) can be freely rinsed by the gel electrophoresis buffer.

2. Gel electrophoresis apparatus according to claim 1, wherein the carrier plate (1) has a planar surface.

3. Gel electrophoresis apparatus according to claim 1, wherein the at least one hold-down element (6) is arranged in the functional lid (7b) and/or at the bottom of the chamber (7a).

4. Gel electrophoresis apparatus according to any one of claims 1 to 3, wherein the at least one hold-down element (6) is formed as the measuring electrode for measuring an electric field.

5. Gel electrophoresis apparatus according to any one of claims 1 to 4, wherein said at least one hold-down member (6) comprises a head portion (6a) and at least one engagement portion (6b) for fixing at least one support plate (1).

6. Gel electrophoresis apparatus according to any one of claims 1 to 5, wherein at least one barrier (14, 15) for generating a laminar buffer flow is arranged on one side of the chamber wall.

7. The gel electrophoresis apparatus of any one of claims 1 to 6, wherein the gel electrophoresis apparatus further comprises a support member (16),
- wherein the support member comprises the at least one hold-down element (6) for receiving and positioning at least one support plate (1), and
- the support member (16) can be positioned in the chamber (7a).

8. The gel electrophoresis apparatus of claim 7, wherein the support member 16 comprises an anti-rotation device 162, and wherein a corresponding anti-rotation device 72 is disposed at the bottom of the chamber 7a.

9. The gel electrophoresis apparatus according to any one of claims 1 to 8,
wherein the support plate (1) has a planar surface and
- a polyester film (2) with a hydrophilic surface is applied to the planar surface and/or
- the planar surface is treated with a hydrophilic layer.

10. The gel electrophoresis apparatus of claim 9, wherein the support plate (1) comprises an alkali-resistant material having a breaking strength of at least 15 to 20 Newtons.

11. Gel electrophoresis system for single cell gel electrophoresis with a high reproducibility, **characterised in that** the gel electrophoresis system has:
- a gel electrophoresis apparatus according to any one of claims 1 to 10, and
- an integrated means for temperature control and/or
- an integrated means for cooling and heat generation and/or
- an integrated means for buffer circulation and/or
- an integrated voltage generating device and/or
- an integrated mains connection unit and/or
- a downstream, integrated and automated analyser to quantify the results, and/or
- a digital interface for further processing of the results.

12. A gel electrophoresis system according to claim 11, comprising the integrated voltage generating device, and further comprising
- the means of cooling and heat generation and/or
- the means of buffer circulation.

13. A method for performing a comet assay using the gel electrophoresis system according to claim 12,
whereby an integrated software based on the data of the measuring electrode of the gel electrophoresis device controls and/or regulates
- the voltage generating device.

## Revendications

1. Appareil d'électrophorèse sur gel pour l'électrophorèse sur gel de cellules individuelles avec une reproductibilité élevée, dans lequel l'appareil d'électrophorèse sur gel comprend
- une chambre (7a) destinée à recevoir un tampon d'électrophorèse sur gel,
- un couvercle fonctionnel (7b) pour fermer la chambre,
- au moins une paire d'électrodes (8, 8') pour générer un champ électrique homogène dans la chambre,
- au moins une plaque de support (1),
- au moins un élément de maintien en position basse (6) pour recevoir et positionner la au moins une plaque de support (1),
**caractérisé en ce que** l'appareil d'électrophorèse sur gel comprend une électrode de mesure différente de la au moins une paire d'électrodes (8, 8') pour la mesure d'un champ électrique de la au moins une paire d'électrodes (8, 8'), et dans lequel l'au moins un élément de maintien (6) est conçu pour positionner l'au moins une plaque de support (1) dans le champ électrique homogène généré par l'au moins une paire d'électrodes (8, 8'), et pour recevoir l'au moins une plaque de support (1) de telle sorte que la plaque de support (1) puisse être librement balayée par le tampon d'électrophorèse en gel dans la chambre (7a).

2. Appareil d'électrophorèse sur gel selon la revendication 1, dans lequel la plaque de support (1) présente une surface plane.

3. Appareil d'électrophorèse sur gel selon la revendication 1, dans lequel l'au moins un élément de maintien en position basse (6) est disposé dans le couvercle fonctionnel (7b) et/ou au fond de la chambre (7a).

4. Appareil d'électrophorèse sur gel selon l'une quelconque des revendications 1 à 3, dans lequel ledit au moins un élément de maintien en position basse (6) est configuré comme l'électrode de mesure pour la mesure d'un champ électrique.

5. Appareil d'électrophorèse sur gel selon l'une quelconque des revendications 1 à 4, dans lequel ledit au moins un élément de maintien en position basse (6) comprend une partie de tête (6a) et au moins une partie d'encliquetage (6b) pour la fixation d'au moins une plaque support (1).

6. Appareil d'électrophorèse sur gel selon l'une quelconque des revendications 1 à 5, dans lequel au moins une barrière (14, 15) destinée à générer un flux laminaire de tampon est disposée sur un côté de la paroi de la chambre.

7. Appareil d'électrophorèse sur gel selon l'une quelconque des revendications 1 à 6, dans lequel l'appareil d'électrophorèse sur gel comprend en outre un élément de support (16),
- l'élément de support comprenant ledit au moins un élément de maintien en position basse (6) pour recevoir et positionner au moins une plaque de support (1), et
- l'élément de support (16) peut être positionné dans la chambre (7a).

8. Appareil d'électrophorèse sur gel selon la revendication 7, dans lequel l'élément de support 16 présente un blocage en rotation 162 et dans lequel un blocage en rotation correspondant 72 est disposé au fond de la chambre 7a.

9. Appareil d'électrophorèse sur gel selon l'une quelconque des revendications 1 à 8, la plaque de support (1) présentant une surface plane et
- un film de polyester (2) à surface hydrophile est appliqué sur la surface plane et/ou
- la surface plane est traitée avec une couche hydrophile.

10. Appareil d'électrophorèse sur gel selon la revendication 9, dans lequel la plaque de support (1) présente un matériau résistant aux alcalis avec une résistance à la rupture d'au moins 15 à 20 Newton.

11. Système d'électrophorèse sur gel pour l'électrophorèse sur gel de cellules individuelles avec une reproductibilité élevée, **caractérisé en ce que** le système d'électrophorèse sur gel :
- un appareil d'électrophorèse sur gel selon l'une quelconque des revendications 1 à 10, et
- un moyen intégré de contrôle de la température et/ou
- un moyen intégré de refroidissement et de production de chaleur, et/ou
- un moyen intégré de circulation tampon et/ou
- un appareil de production de tension intégré et/ou
- un appareil de raccordement au réseau intégré et/ou
- un dispositif d'analyse intégré et automatisé en aval pour quantifier les résultats et/ou
- une interface numérique pour le traitement ultérieur des résultats
est présent.

12. Système d'électrophorèse sur gel selon la revendication 11, comprenant le dispositif de génération de tension intégré et comprenant en outre
- le moyen de refroidissement et de production de chaleur, et/ou
- le moyen de faire circuler le tampon.

13. Procédé de réalisation d'un test Cornet en utilisant le système d'électrophorèse sur gel selon la revendication 12,
dans lequel un logiciel intégré, basé sur les données de l'électrode de mesure de l'appareil d'électrophorèse sur gel contrôle et/ou régule
- l'appareil générateur de tension.
